# EUROPEAN PATENT APPLICATION

(11) **EP 4 506 134 A1**
(43) Date of publication of application: **12.02.2025**
(21) Application number: 24188079.8
(22) Date of filing: 11.07.2024
(51) Int. Cl.: B29C 44/04, B29C 45/16, B29C 44/42

(54) **INJECTION MOLDING SYSTEM AND METHOD**

(30) Priority: 08.08.2023 US 202363518107 P; 15.05.2024 US 202418664326
(71) Applicant: King Steel Machinery Co., Ltd., Taichung City 407 (TW)
(72) Inventor: Chen, Ching-Hao, 407 Taichung City (TW); Lee, Yi-Chung, 411 Taichung City (TW); Yeh, Liang-Hui, 402 Taichung City (TW)
(74) Representative: Michalski Hüttermann & Partner Patentanwälte mbB

(57) **Abstract**

An injection molding method is provided. A molding device is provided and includes a first mold, a second mold over the first mold and a mold cavity defined by the first mold and the second mold. A first mixture is injected into the mold cavity through a first feeding port. A first component is formed from the first mixture. A second mixture is injected into the mold cavity through a second feeding port. A second component is formed from the second mixture. The second component is at least partially in contact with the first component, and the first component and the second component have different physical properties.

## Description

### CROSS-REFERENCE TO RELATED APPLICATION

The present application claims priority to U.S. Provisional Patent Application No. 63/518,107, filed on August 08, 2023 and U.S. Patent Application No. 18/664,326, filed on May 15, 2024, which are incorporated by reference herein in their entirety.

### TECHNICAL FIELD

The present disclosure is related to an injection molding system and an injection molding method, and, in particular, to an injection molding system and a method of injection molding for forming an article including more than one portion having different physical or functional properties.

### BACKGROUND

Foamed polymeric material has many advantages, such as high strength, low weight, impact resistance, thermal insulation, and others. Foamed articles can be made by injection molding or extrusion molding. For example, after the polymeric material is melted and mixed with a blowing agent to form a mixture, a force or pressure is applied to the mixture to inject or extrude the mixture into a cavity of a mold, and the mixture is foamed and cooled in the cavity to form the foamed article.

However, it is necessary to improve the properties of the foamed article made by the injection molding system, such as causing different portions of the foamed article to have different properties. Therefore, there is a need for improvements to structures of the injection-molding system and the method for making foamed articles.

### BRIEF SUMMARY OF THE DISCLOSURE

The present disclosure discloses an injection molding system and an injection molding method.

According to one embodiment of the present disclosure, an injection molding method is provided. The injection molding method includes: providing a molding device including a first mold, a second mold over the first mold and a mold cavity defined by the first mold and the second mold; injecting a first mixture into the mold cavity through a first feeding port; forming a first component from the first mixture; injecting a second mixture into the mold cavity through a second feeding port; and, forming a second component from the second mixture. The second component is at least partially in contact with the first component, and the first component and the second component have different physical properties.

According to one embodiment of the present disclosure, an injection molding method is provided. The injection molding method includes: providing a molding device including a first mold, a second mold over the first mold and a mold cavity defined by the first mold and the second mold; injecting a first mixture into the mold cavity through a first feeding port; forming a first component from the first mixture; injecting a second mixture into the mold cavity through a second feeding port; and forming a second component from the second mixture. The second component is separated from the first component, and the first component and the second component have different physical properties.

According to one embodiment of the present disclosure, an assembly of polymeric components is provided. The assembly includes a first polymeric component having a first skin layer, and a second polymeric component having a second skin layer in contact with the first skin layer. A density of the first skin layer is greater than a central part of the first polymeric component, and a density of the second skin layer is greater than a central part of the second polymeric component, and a visible boundary line is present between the first skin layer and the second skin layer.

### BRIEF DESCRIPTION OF THE DRAWINGS

Aspects of the present disclosure are best understood from the following detailed description when read with the accompanying figures. It should be noted that, in accordance with the standard practice in the industry, various features are not drawn to scale. In fact, the dimensions of the various features may be arbitrarily increased or reduced for clarity of discussion.
FIG. 1 is a schematic of an injection molding system in accordance with some embodiments of the present disclosure.
FIG. 2 is a flowchart showing an injection molding method in accordance with some embodiments of the present disclosure.
FIG. 3 is a schematic of the molding device of FIG. 1, in accordance with some embodiments of the present disclosure.
FIGs. 4-10 are schematic cross-sectional views illustrating exemplary stages in the injection molding method of FIG. 2 according to one embodiment of the present disclosure.
FIGs. 11-16 are schematic cross-sectional views illustrating exemplary stages in the injection molding method of FIG. 2 according to one embodiment of the present disclosure.
FIGs. 17-21 are schematic cross-sectional views illustrating exemplary stages in the injection molding method of FIG. 2 according to one embodiment of the present disclosure.
FIGs. 22-26 are schematic cross-sectional views illustrating exemplary stages in the injection molding method of FIG. 2 according to one embodiment of the present disclosure.
FIGs. 27-31 are schematic cross-sectional views illustrating exemplary stages in the injection molding method of FIG. 2 according to one embodiment of the present disclosure.
FIGs. 32-39 are schematic cross-sectional views illustrating exemplary stages in the injection molding method of FIG. 2 according to one embodiment of the present disclosure.
FIGs. 40-43 are schematic cross-sectional views illustrating exemplary stages in the injection molding method of FIG. 2 according to one embodiment of the present disclosure.
FIGs. 44 and 45 are schematic cross-sectional views illustrating exemplary stages in the injection molding method of FIG. 2 according to one embodiment of the present disclosure.

### DETAILED DESCRIPTION

The following disclosure provides many different embodiments, or examples, for implementing different features of the provided subject matter. Specific examples of components and arrangements are described below to simplify the present disclosure. These are, of course, merely examples and are not intended to be limiting. For example, the formation of a first feature over or on a second feature in the description that follows may include embodiments in which the first and second features are formed in direct contact, and may also include embodiments in which additional features may be formed between the first and second features, such that the first and second features may not be in direct contact. In addition, the present disclosure may repeat reference numerals and/or letters in the various examples. This repetition is for the purpose of simplicity and clarity and does not in itself dictate a relationship between the various embodiments and/or configurations discussed.

Further, spatially relative terms, such as "beneath," "below," "lower," "above," "upper" and the like, may be used herein for ease of description to describe one element or feature's relationship to another element(s) or feature(s) as illustrated in the figures. The spatially relative terms are intended to encompass different orientations of the device in use or operation in addition to the orientation depicted in the figures. The apparatus may be otherwise oriented (rotated 90 degrees or at other orientations) and the spatially relative descriptors used herein may likewise be interpreted accordingly.

Notwithstanding that the numerical ranges and parameters setting forth the broad scope of the disclosure are approximations, the numerical values set forth in the specific examples are reported as precisely as possible. Any numerical value, however, inherently contains certain errors necessarily resulting from the standard deviation found in the respective testing measurements. Also, as used herein, the term "about" generally means within 10%, 5%, 1%, or 0.5% of a given value or range. Alternatively, the term "about" means within an acceptable standard error of the mean when considered by one of ordinary skill in the art. Other than in the operating/working examples, or unless otherwise expressly specified, all of the numerical ranges, amounts, values and percentages, such as those for quantities of materials, durations of times, temperatures, operating conditions, ratios of amounts, and the likes thereof disclosed herein, should be understood as modified in all instances by the term "about." Accordingly, unless indicated to the contrary, the numerical parameters set forth in the present disclosure and the attached claims are approximations that can vary as desired. At the very least, each numerical parameter should be construed in light of the number of reported significant digits and by applying ordinary rounding techniques. Ranges can be expressed herein as from one endpoint to another endpoint or between two endpoints. All ranges disclosed herein are inclusive of the endpoints, unless specified otherwise.

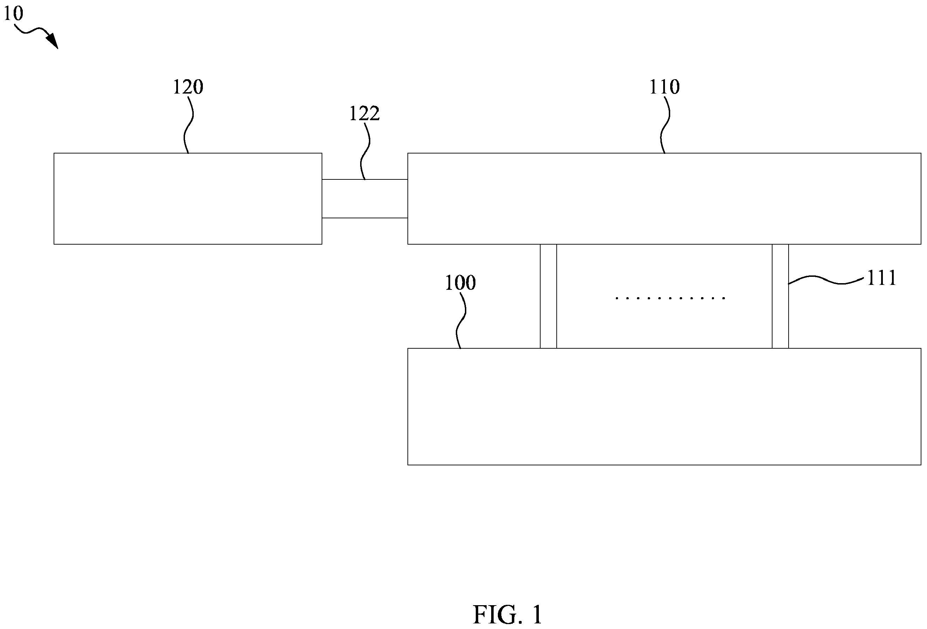

FIG. 1 is a schematic of an injection molding system 10 in accordance with some embodiments of the present disclosure. The injection molding system 10 includes a mixing unit 120, an injection unit 110 and a molding device 100.

The mixing unit 120 is configured to produce a mixture of a polymeric material and a physical blowing agent. The mixture is then delivered to the injection unit 110 through at least one delivery channel 122. The injection unit 110 is configured to discharge the mixture. The mixture is then discharged out through one or more discharging channels 111 of the injection unit engaged with the molding device 100. The mixture can flow from the injection unit 110 into the molding device 100. The molding device 100 is configured to form an article containing polymeric material. In some embodiments, the article is formed inside the molding device 100 by physical foaming. The mixture undergoes physical foaming and then forms a foamed article. In some embodiments, the article is a part of a footwear (such as outsole, insole, midsole, etc.) or any other products.

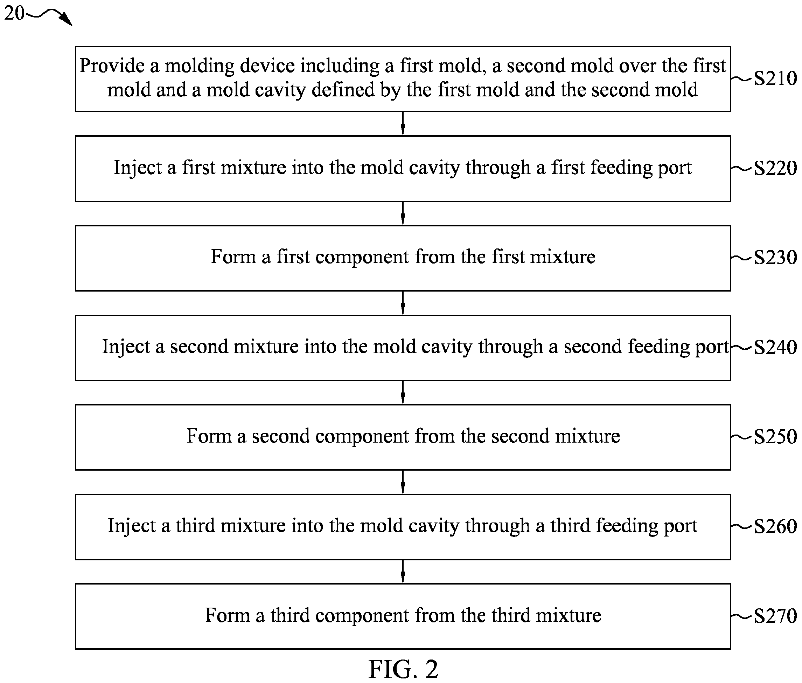

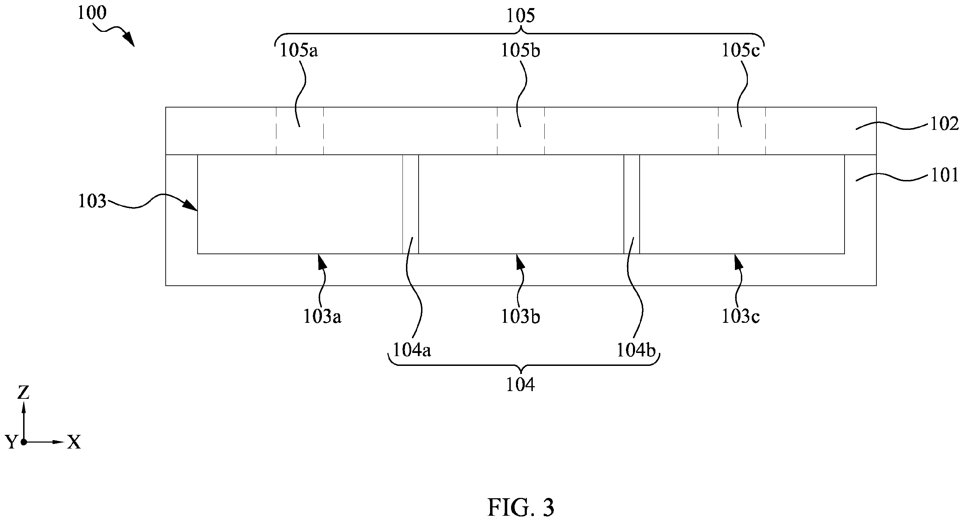

FIG. 2 is a flowchart showing an injection molding method 20 in accordance with some embodiments of the present disclosure. The injection molding method 20 includes the operations S210 through S270, and the description and illustrations are not deemed as a limitation of the sequence of the operations S210 through S270. FIGs. 3-45 are schematic cross-sectional views of various stages of the injection molding method 20. In some embodiments, the operations of the injection molding method 20 can be repeated and performed automatically.

In some embodiments, the injection molding method 20 is performed by the injection molding system 10 of FIG. 1. In operation S210, the molding device 100 including a mold cavity defined by the first mold and the second mold engaged with each other is provided. In operation S220, the injection unit 110 is configured to inject a first mixture from the mixing unit 120 into the mold cavity of the molding device 100 through a first feeding port of the molding device 100 and the corresponding discharging channel 111, and then a first component is formed from the first mixture in operation 5230. In operation S240, the injection unit 110 is configured to inject a second mixture from the mixing unit 120 into the mold cavity of the molding device 100 through a second feeding port of the molding device 100 and the corresponding discharging channel 111, and then a second component is formed from the second mixture in operation S250. In operation S260, the injection unit 110 is configured to inject a third mixture from the mixing unit 120 into the mold cavity of the molding device 100 through a third feeding port of the molding device 100 and the corresponding discharging channel 111, and then a third component is formed from the third mixture in operation S270.

In some embodiments, the operations S220 and 5230 are replaced with an additional operation that the first component is formed in advance and is placed into the mold cavity of the molding device 100. In response to the additional operation, the third mixture and the second mixture are the same. In some embodiments, the mold cavity is defined by the second mold and a fourth component hold by the first mold.

In some embodiments, the flow rates/quantities of the first, second and third mixtures are the same or different. In some embodiments, the first, second and third mixtures are different, so that the first, second and third components have different physical properties. The first, second and third components are formed in different areas or parts of the article. In some embodiments, the second component is at least partially in contact with the first and third components, i.e., the second component is sandwiched by the first and third components. In some embodiments, the second component is separated from the first component by the third component.

In some embodiments, the second mixture is softer than the first mixture, and the third mixture is softer than the second mixture. In some embodiments, the harder mixture is injected first and the softer mixture is injected later.

In order to illustrate concepts and the injection molding method 20 of the present disclosure, various embodiments are provided below. However, the present disclosure is not intended to be limited to specific embodiments. In addition, elements, conditions or parameters illustrated in different embodiments can be combined or modified to form different combinations of embodiments as long as the elements, parameters or conditions used are not in conflict. For ease of illustration, reference numerals with similar or same functions and properties are repeated in different embodiments and figures.

FIG. 3 is a schematic of the molding device 100 of FIG. 1, in accordance with some embodiments of the present disclosure. The molding device 100 includes a first mold 101 and a second mold 102. The first mold 101 is engageable with the second mold 102. The molding device 100 is in a closed state when the first mold 101 is engaged with the second mold 102. In some embodiments, the first mold 101 is a lower mold and the second mold 102 is an upper mold, and the first mold 101 is under the second mold 102. In some embodiments, the molding device 100 includes a mold cavity 103 defined by the first mold 101 and the second mold 102 when the first mold 101 is engaged with the second mold 102. The mold cavity 103 is configured to hold the mixture or the article formed from the mixture.

In some embodiments, the mold cavity 103 can be divided into multiple sub-cavities 103a, 103b and 103c by at least one partition 104. Two of the adjacent sub-cavities 103a, 103b and 103c are separated by the partition 104. For example, the sub-cavities 103a and 103b are separated from each other by the partition 104a, and the sub-cavities 103b and 103c are separated from each other by the partition 104b. In some embodiments, the partition 104 is movable relative to the first mold 101 or the second mold 102. In some embodiments, the partition 104 is manually or automatically extendable or retractable within the mold cavity 103.

In some embodiments, the partition 104 protrudes from the first mold 101 or the second mold 102. In some embodiments, the partition 104 is extendable into or retractable from the mold cavity 103. For example, the partition 104 can be extended into the mold cavity 103 from the first mold 101 or retracted from the mold cavity 103 into the first mold 101.

In some embodiments, the sub-cavity 103a is defined by the first mold 101, the second mold 102, and the partition 104a. Moreover, the sub-cavity 103b is defined by the first mold 101, the second mold 102 and the partitions 104a and 104b, and the sub-cavity 103c is defined by the first mold 101, the second mold 102, and the partition 104b. In some embodiments, the sub-cavities 103a, 103b and 103c are not communicable with each other when the partitions 104a and 104b are inside the mold cavity 103, as shown in FIG. 3. In some embodiments, the partitions 104a and 104b have same or different thickness in the X-direction and the same height in the Z-direction. Moreover, the sub-cavities 103a, 103b and 103c have same or different widths in the X-direction and the same height in Z-direction. In some embodiments, the sub-cavities 103a, 103b and 103c have same lengths in the Y-direction.

In some embodiments, a feeding port 105 is disposed at the first mold 101 or the second mold 102. The feeding port 105 is configured to receive the mixture from the discharging channel 111 of the injection unit 110 of FIG. 1 when the discharging channel 111 is engaged with the molding device 100. The mixture can flow into the mold cavity 103 through the feeding port 105. In the embodiment of FIG. 1, there are three feeding ports 105a, 105b and 105c communicable with the sub-cavities 103a, 103b and 103c, respectively, when the partitions 104a and 104b are disposed within the mold cavity 103. In some embodiments, each of the sub-cavity 103a, 103b and 103c corresponds to one or more feeding ports 105. In some embodiments, the feeding ports 105a, 105b and 105c have same or different widths in X-direction. In some embodiments, the feeding ports 105a, 105b and 105c allow a fluid flowing through in same or different flow rates.

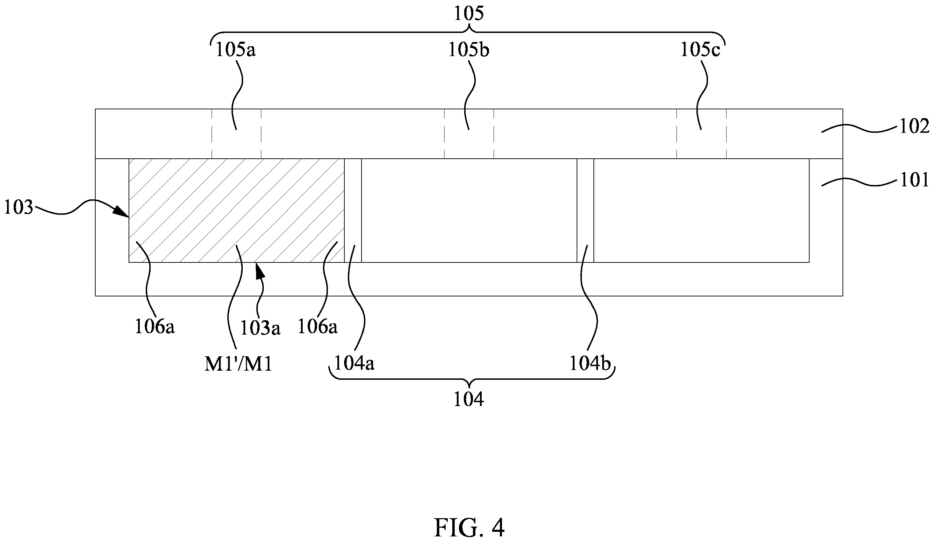

FIGs. 4-10 are schematic cross-sectional views illustrating exemplary stages in the injection molding method 20 of FIG. 2 according to a first embodiment of the present disclosure.

In FIG. 4, the first mold 101 is engaged with the second mold 102, and a first partition 104a is disposed within a mold cavity 103. In some embodiments, the first partition 104a is disposed by extending the first partition 104a from the first mold 101 to the second mold 102. In some embodiments, the engagement of the first mold 101 with the second mold 102 is performed before or after the disposing of the first partition 104a. In some embodiments, after the engagement of the first mold 101 with the second mold 102 and the disposing of the first partition 104a, a first gas is injected into the sub-cavity 103a to increase a pressure inside the first sub-cavity 103a. In some embodiments, the first gas is air or the like. In some embodiments, the first sub-cavity 103a is defined by the first mold 101, the second mold 102 and the first partition 104a.

As described in the operation 5220 of FIG. 2, a first mixture M1' is injected into the first sub-cavity 103a through a first feeding port 105a. In some embodiments, the first mixture M1' is injected into the first sub-cavity 103a filled with the first gas. In some embodiments, the discharging channel 111 of FIG. 1 is engaged with the first feeding port 105a, and then the first mixture M1' is injected from the discharging channel 111 into the first sub-cavity 103a through the first feeding port 105a. In some embodiments, the first mixture M1' includes polymeric material (such as thermoplastic polyurethane (TPU), polyurethane (PU), plastics or the like) and physical blowing agent (such as gaseous nitrogen, carbon dioxide, supercritical fluid or the like). In some embodiments, the first mixture M1' is foamable or slightly foamable.

In some embodiments, after the injection of the first mixture M1', the first mixture M1' undergoes physical foaming within the first sub-cavity 103a to become a first component M1, as described in the operation S230. In some embodiments, during the physical foaming of the first mixture M1' and/or after the formation of the first component M1, the pressure inside the first sub-cavity 103a is reduced by discharging at least a portion of the first gas out of the first sub-cavity 103a and/or discharging a portion of the physical blowing agent released from the first mixture M1' out of the first sub-cavity 103a. In some embodiments, after the physical foaming of the first mixture M1', the first component M1 having a first skin layer 106a is formed. The first skin layer 106a is adjacent to or in contact with the first partition 104a. The first skin layer 106a has higher density than a central part of the first component M1 away from the first partition 104a. The first skin layer 106a has lesser degree of physical foaming than the central part of the first component M1. In other words, the central part of the first component M1 undergoes a higher degree of physical forming than a peripheral part of the first component M1. In some embodiments, the first skin layer 106a has a thickness of less than 0.5mm.

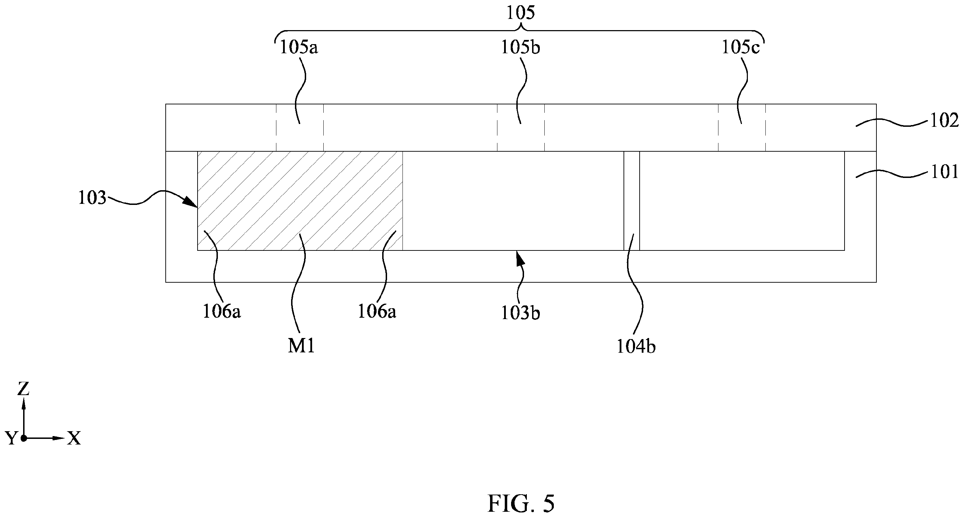

In some embodiments, after the formation of the first component M1, the first partition 104a is removed from the mold cavity 103 as shown in FIG. 5. In some embodiments, the first partition 104a is withdrawn from the mold cavity 103 by retracting the first partition 104a away from the second mold 102 and back to the first mold 101. In some embodiments, after the removal of the first partition 104a, a second sub-cavity 103b defined by the first component M1, a second partition 104b and the second mold 102 is formed as shown in FIG. 5. Furthermore, the second sub-cavity 103b of FIG. 5 is wider than the sub-cavity 103b of FIG. 3 in the X-direction. In some embodiments, the second partition 104b is disposed within the mold cavity 103 after the removal of the first partition 104a. In some embodiments, the second partition 104b is disposed within the mold cavity 103 before the injection of the first mixture M1'. In some embodiments, the second partition 104b is disposed by extending the second partition 104b from the first mold 101 to the second mold 102. In some embodiments, the engagement of the first mold 101 with the second mold 102 is performed before or after the disposing of the second partition 104b.

In some embodiments, a second gas is injected into a second sub-cavity 103b, to increase a pressure inside the second sub-cavity 103b after the disposing of the second partition 104b. In some embodiments, the second gas is air or the like.

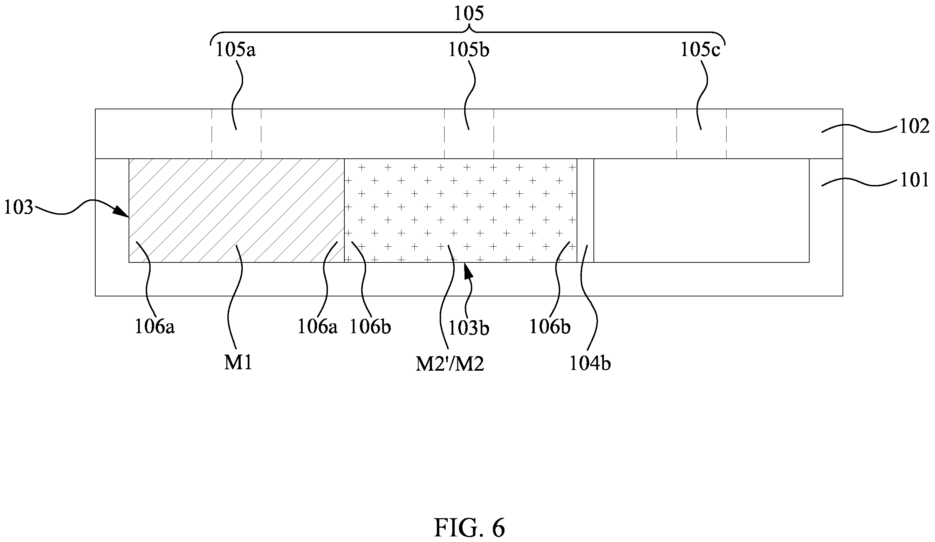

In FIG. 6, as described in the operation S240 of FIG. 2, a second mixture M2' is injected into the second sub-cavity 103b through a second feeding port 105b. It should be noted that the first partition 104a is removed from the mold cavity 103 before the injection of the second mixture M2'. In some embodiments, the second mixture M2' is injected into the second sub-cavity 103b filled with the second gas. In some embodiments, the discharging channel 111 of FIG. 1 is engaged with the second feeding port 105b, and then the second mixture M2' is injected from the discharging channel 111 into the second sub-cavity 103b through the second feeding port 105b. In some embodiments, the second mixture M2' includes polymeric material (such as thermoplastic polyurethane (TPU), polyurethane (PU), plastics or the like) and physical blowing agent (such as gaseous nitrogen, carbon dioxide, supercritical fluid or the like). In some embodiments, the second mixture M2' is foamable or slightly foamable. In some embodiments, the first mixture M1' and the second mixture M2' include same or different materials. In some embodiments, the first mixture M1' and the second mixture M2' have different physical properties such as density, hardness, Young's modulus and so on. In some embodiments, the second mixture M2' is softer than the first mixture M1'. In some embodiments, the first mixture M1' is denser than the second mixture M2'. In some embodiments, the first skin layer 106a of the first component M1 is in contact with the second mixture M2'.

In some embodiments, after the injection of the second mixture M2', the second mixture M2' undergoes physical foaming within the second sub-cavity 103b to become a second component M2, as described in operation S250 of FIG. 2. In some embodiments, during the physical foaming of the second mixture M2' and/or after the formation of the second component M2, the pressure inside the second sub-cavity 103b is reduced by discharging at least a portion of the second gas out of the second sub-cavity 103b and/or discharging a portion of the physical blowing agent released from the second mixture M2' out of the second sub-cavity 103b. In some embodiments, after the physical foaming of the second mixture M2', the second component M2 having a second skin layer 106b is formed. In some embodiments, the second skin layer 106b is adjacent to or in contact with the second partition 104b. In some embodiments, the second skin layer 106b is in contact with the first skin layer 106a of the first component M1. The second skin layer 106b has higher density than a central part of the second component M2 away from the second partition 104b. The second skin layer 106b has lesser degree of physical foaming than the central part. In other words, the central part of the second component M2 undergoes a higher degree of physical forming than a peripheral part of the second component M2. In some embodiments, the second skin layer 106b has a thickness of less than 0.5mm.

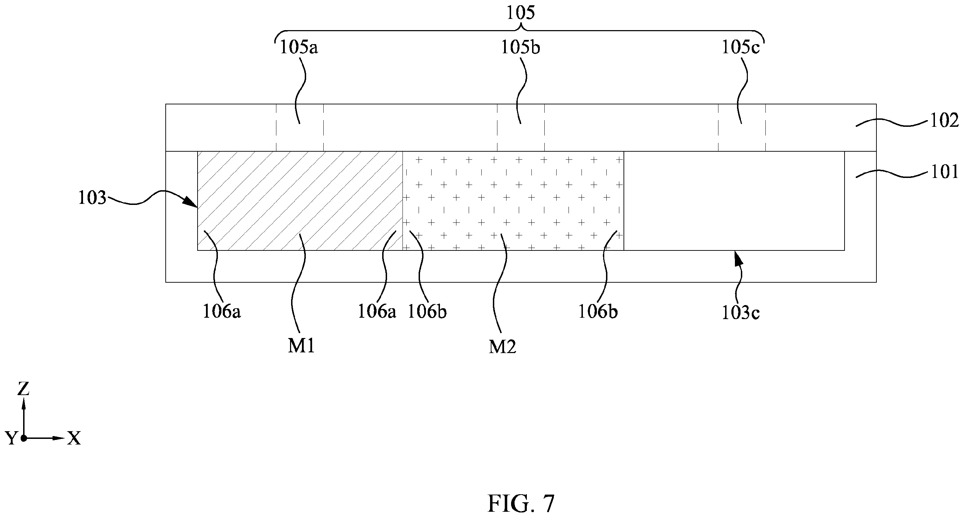

In some embodiments, after the formation of the second component M2, the second partition 104b is removed from the mold cavity 103 as shown in FIG. 7. In some embodiments, the second partition 104b is withdrawn from the mold cavity 103 by retracting the second partition 104b away from the second mold 102 and back to the first mold 101. In some embodiments, after the removal of the second partition 104b, a third sub-cavity 103c defined by the second component M2, the first mold 101 and the second mold 102 is formed as shown in FIG. 7. Furthermore, the third sub-cavity 103c of FIG. 7 is wider than the sub-cavity 103c of FIG. 3 in the X-direction.

In some embodiments, after the removal of the second partition 104b, a third gas is injected into a third sub-cavity 103c to increase a pressure inside the third sub-cavity 103c. In some embodiments, the third gas is air or the like.

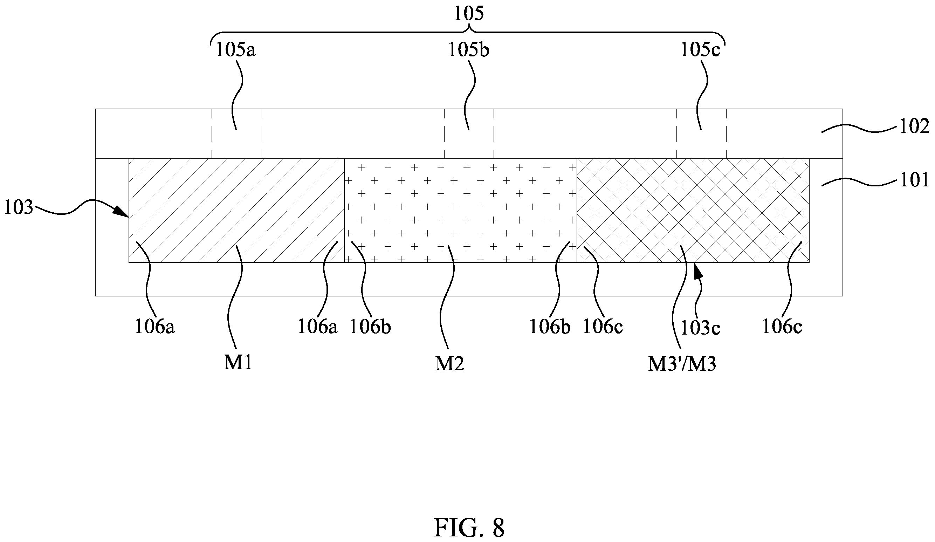

In FIG. 8, as described in the operation S260 of FIG. 2, a third mixture M3' is injected into the third sub-cavity 103c through a third feeding port 105c. In some embodiments, the third mixture M3' is injected into the third sub-cavity 103c filled with the third gas. In some embodiments, the discharging channel 111 of FIG. 1 is engaged with the third feeding port 105c, and then the third mixture M3' is injected from the discharging channel 111 into the third sub-cavity 103c through the third feeding port 105c. In some embodiments, the third mixture M3' includes polymeric material (such as thermoplastic polyurethane (TPU), polyurethane (PU), plastics or the like) and physical blowing agent (such as gaseous nitrogen, carbon dioxide, supercritical fluid or the like). In some embodiments, the third mixture M3' is foamable or slightly foamable. In some embodiments, the first mixture M1', the second mixture M2' and the third mixture M3' include same or different materials. In some embodiments, the first mixture M1', the second mixture M2' and the third mixture M3' have different physical properties such as density, hardness, etc. In some embodiments, the third mixture M3' is softer than the second mixture M2' and the first mixture M1'. In some embodiments, the second mixture M2' and the first mixture M1' are denser than the third mixture M3'. In some embodiments, the second skin layer 106b of the second component M2 is in contact with the third mixture M3'.

In some embodiments, after the injection of the third mixture M3', the third mixture M3' undergoes physical foaming within the third sub-cavity 103c to become a third component M3, as described in operation S270 of FIG. 2. In some embodiments, during the physical foaming of the third mixture M3' and/or after the formation of the third component M3, the pressure inside the third sub-cavity 103c is reduced by discharging at least a portion of the third gas out of the third sub-cavity 103c and/or discharging a portion of the physical blowing agent released from the third mixture M3' out of the third sub-cavity 103c. In some embodiments, after the physical foaming of the third mixture M3', the third component M3 having a third skin layer 106c is formed. In some embodiments, the third skin layer 106c is adjacent to or in contact with the second component M2. In some embodiments, the second skin layer 106b of the second component M2 is in contact with the third skin layer 106c of the third component M3. The third skin layer 106c has higher density than a central part of the third component M3. The third skin layer 106c has lesser degree of physical foaming than the central part. In other words, the central part of the third component M3 undergoes a higher degree of physical forming than a peripheral part of the third component M3. In some embodiments, the third skin layer 106c has a thickness of less than 0.5mm.

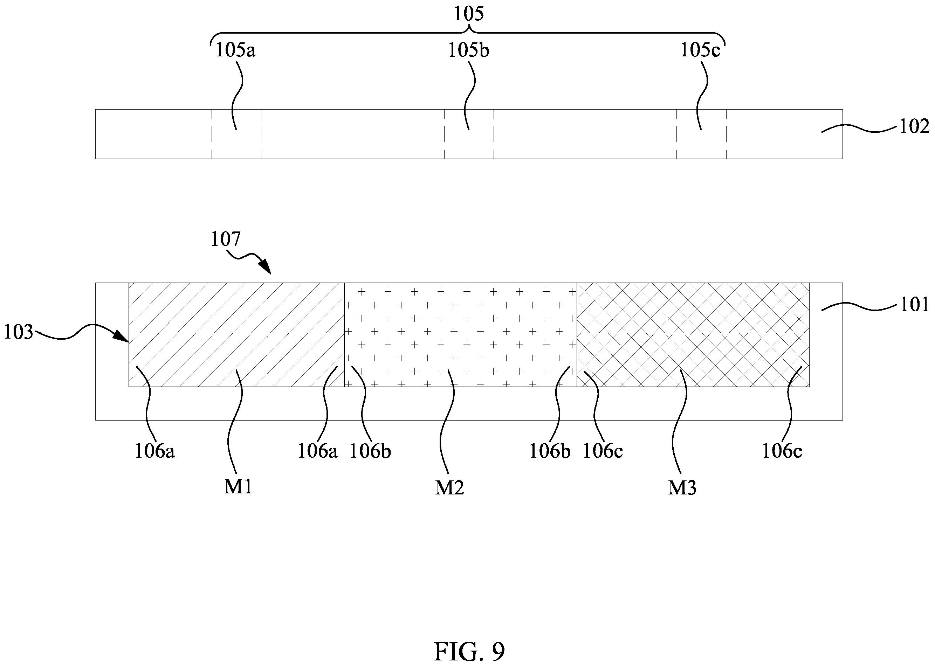

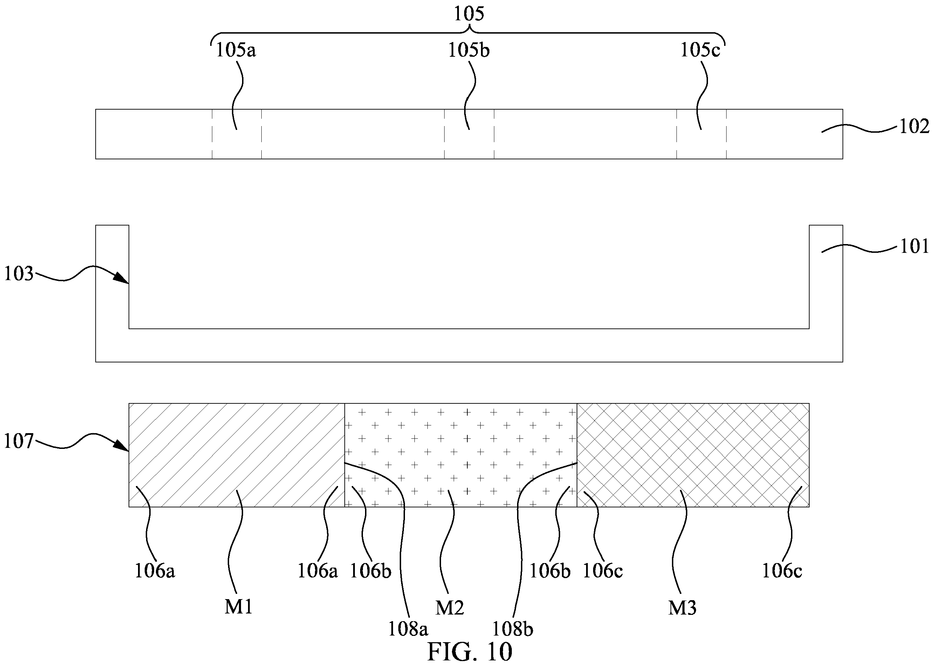

In FIG. 9, after the formation of the third component M3, the first mold 101 is disengaged with the second mold 102. After the formation of the third component M3, an article 107 having the first component M1, the second component M2 and the third component M3 is formed, and the second component M2 is sandwiched by the first component M1 and the third component M3. The article 107 is formed within the mold cavity 103. In some embodiments, after the disengagement of the first mold 101 and the second mold 102, the article 107 is taken out from the mold cavity 103 as shown in FIG. 10. In some embodiments, the operations described above can be repeated and performed automatically.

In some embodiments, the first component M1 is directly attached to the second component M2, and the second component M2 is directly attached to the third component M3. In other words, no additional component or material (such as adhesive or the like) is disposed between the first component M1 and the second component M2 and between the second component M2 and the third component M3. In some embodiments, the article 107 has various densities or hardnesses.

In the embodiment of FIG. 10, top surfaces of the components M1, M2, and M3 are form in the same level defined by the second mold 102, and bottom surfaces of the components M1, M2, and M3 are form in the same level defined by the first mold 101. In some embodiments, the top surfaces of the components M1, M2, and M3 are form in different levels. In some embodiments, the bottom surfaces of the components M1, M2, and M3 are form in different levels. In some embodiments, the components M1, M2, and M3 have the same or different thicknesses. Furthermore, the first component M1 is separated from the third component M3 by the second component M2.

In some embodiments, the article 107 includes a visible boundary line between two adjacent components. For example, a first visible boundary line 108a is present between the first component M1 and the second component M2, and a second visible boundary line 108b is present between the second component M2 and the third component M3. In some embodiments, the first visible boundary line 108a and the second visible boundary line 108b are respectively a straight line, a curve, a spline, a polyline, etc. from a top view of the article 107. In some embodiments, the first visible boundary line 108a extends over top surfaces of the first component M1 and the second component M2, and the second visible boundary line 108b extends over top surfaces of the second component M2 and the third component M3. In some embodiments, the first visible boundary line 108a extends from the top surfaces to the bottom surfaces of the first component M1 and the second component M2, and the second visible boundary line 108b extends from the top surfaces to the bottom surfaces of the second component M2 and the third component M3.

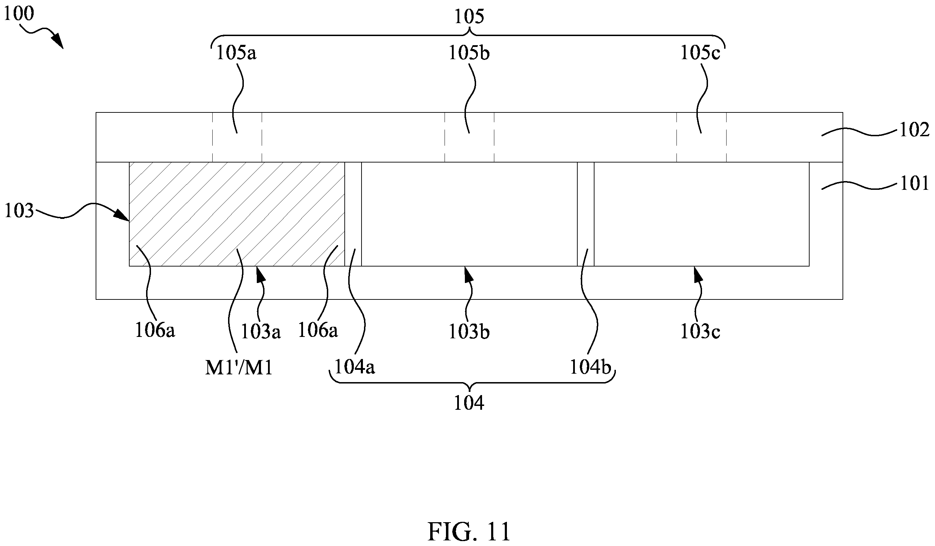

FIGs. 11-16 are schematic cross-sectional views illustrating exemplary stages in the injection molding method 20 of FIG. 2 according to a second embodiment of the present disclosure. In the second embodiment, the third component M3 is formed before the formation of the second component M2.

In FIG. 11, the first mold 101 is engaged with the second mold 102, and a first partition 104a and a second partition 104b are disposed within a mold cavity 103. The mold cavity 103 is divided into the sub-cavities 103a, 103b and 103c by the first partition 104a and the second partition 104b. Moreover, the sub-cavity 103b is defined by the first mold 101, the second mold 102 and the partitions 104a and 104b, and the sub-cavity 103c is defined by the first mold 101, the second mold 102, and the partition 104b.

As described in the operation 5220 of FIG. 2, the first mixture M1' is injected into the first sub-cavity 103a through a first feeding port 105a. After the injection of the first mixture M1', the first mixture M1' undergoes physical foaming within the first sub-cavity 103a to become a first component M1, as described in the operation S230. In some embodiments, the first component M1 includes a first skin layer 106a adjacent to or in contact with the first partition 104a.

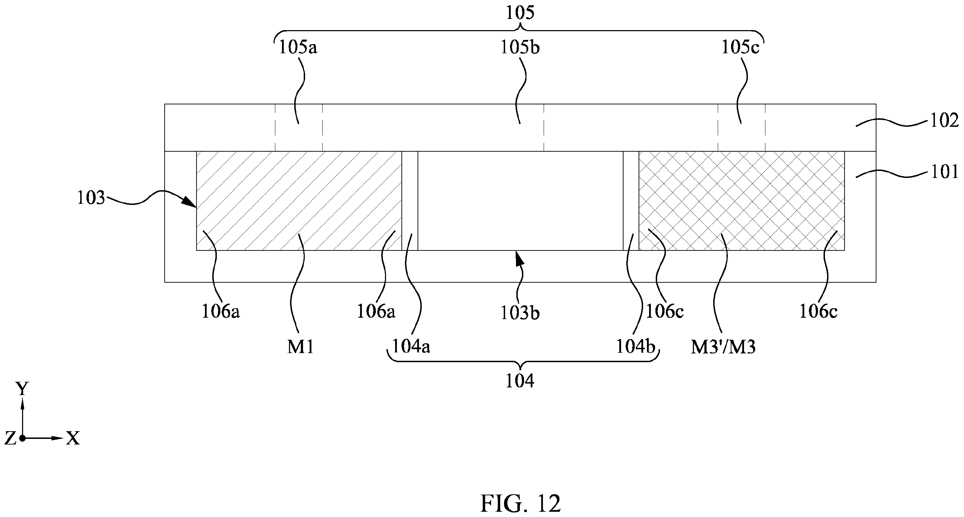

In FIG. 12, as described in the operation S240 of FIG. 2, after the formation of the first component M1, a third mixture M3' is injected into the third sub-cavity 103c through a third feeding port 105c. After the injection of the third mixture M3', the third mixture M3' undergoes physical foaming to become a third component M3, as described in the operation S250. In some embodiments, the third component M3 includes a third skin layer 106c adjacent to or in contact with the second partition 104b.

In some embodiments, compared with the third component M3 formed in the third sub-cavity 103c of FIG. 8, the third component M3 is formed prior to the formation of the second component M2 in FIG. 12. Furthermore, the third component M3 of FIG. 12 has a wider width than the third component M3 of FIG. 8 in the X-direction. In other words, by adjusting the formation sequence of the third component M3, the third component M3 may have different sizes.

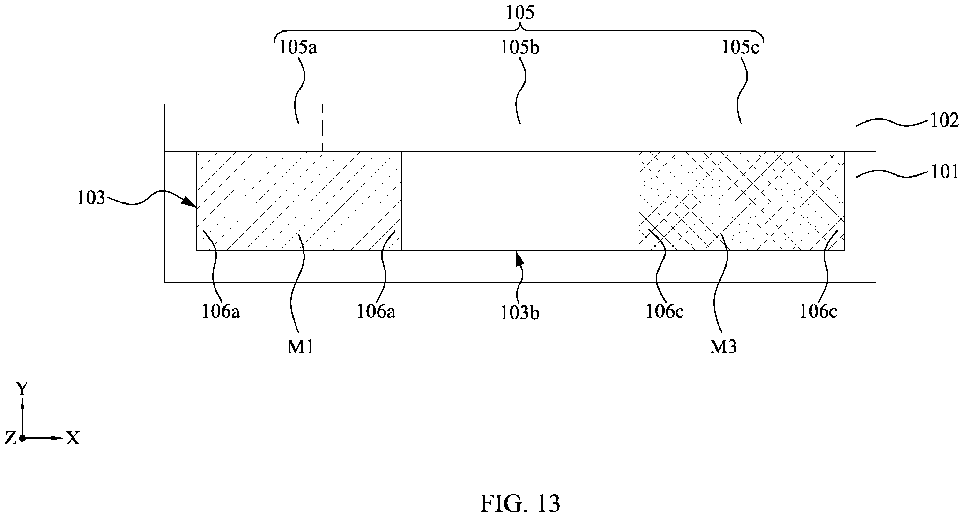

In FIG. 13, after the formation of the third component M3, the first partition 104a and the second partition 104b are removed from the mold cavity 103 simultaneously or sequentially. After the removal of the first partition 104a and the second partition 104b, the second sub-cavity 103b is defined by the first mold 101, the second mold 102, the first component M1 and the second component M2. Therefore, the second sub-cavity 103b of FIG. 12 is wider than the sub-cavity 103b of FIG. 13 in the X-direction.

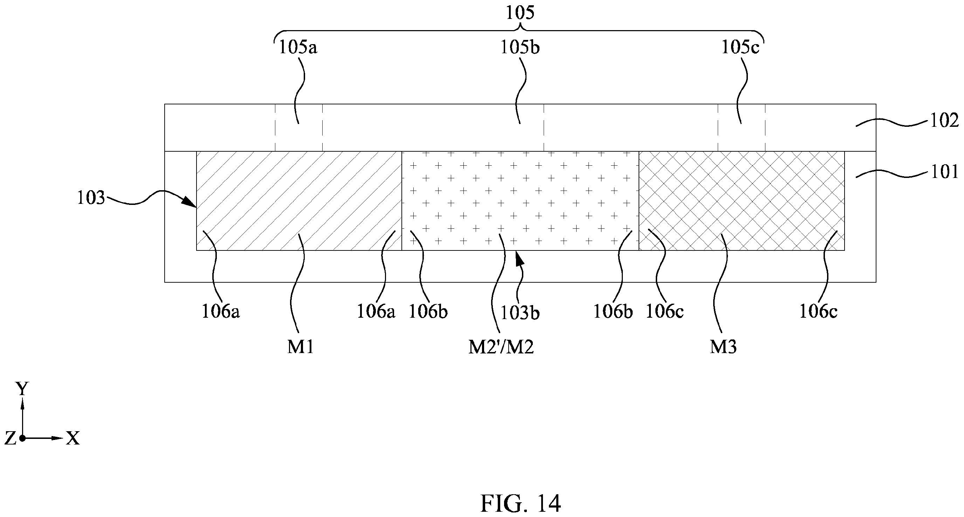

In FIG. 14, as described in operation S260 of FIG. 2, the second mixture M2' is injected in the second sub-cavity 103b. In some embodiments, the second mixture M2' is in contact with the first component M1 and the third component M3. In some embodiments, the second mixture M2' undergoes physical foaming to become the second component M2, as described in operation S270 of FIG. 2. In some embodiments, the second component M2 includes a second skin layer 106b adjacent to or in contact with the first component M1 and the third component M3.

In some embodiments, compared with the second component M2 formed in the second sub-cavity 103b of FIG. 6, the second component M2 is formed after the formation of the third component M3 in FIG. 14. Furthermore, the second component M2 of FIG. 14 has a wider width than the second component M2 of FIG. 6 in the X-direction. In other words, by adjusting the formation sequence of the second component M2, the second component M2 may have different sizes.

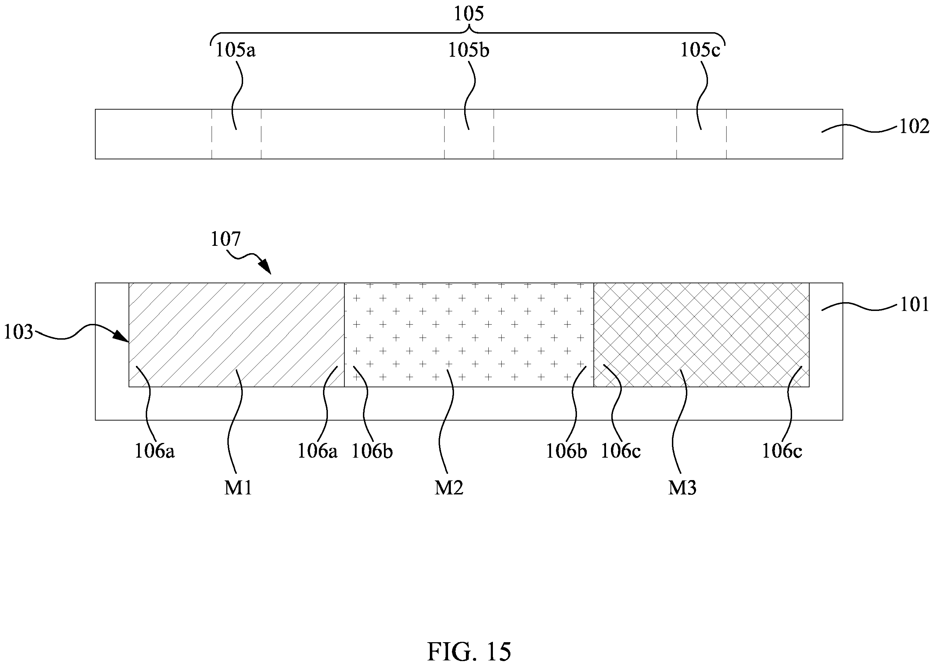

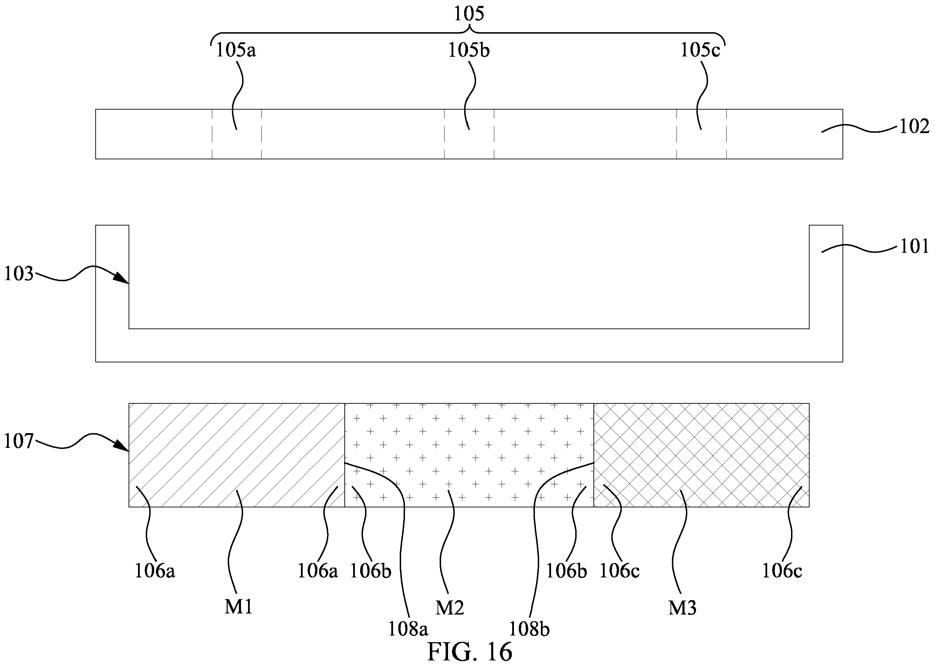

After the formation of the second component M2, an article 107 is formed as shown in FIG. 15. The article 107 is taken out from the mold cavity 103 after the disengagement of the first mold 101 and the second mold 102 as shown in FIG. 16. In some embodiments, the second component M2 is softer than the first component M1 and the third component M3. In some embodiments, the first component M1 and the third component M3 are denser than the second component M2. In some embodiments, the steps described above can be repeated and performed automatically.

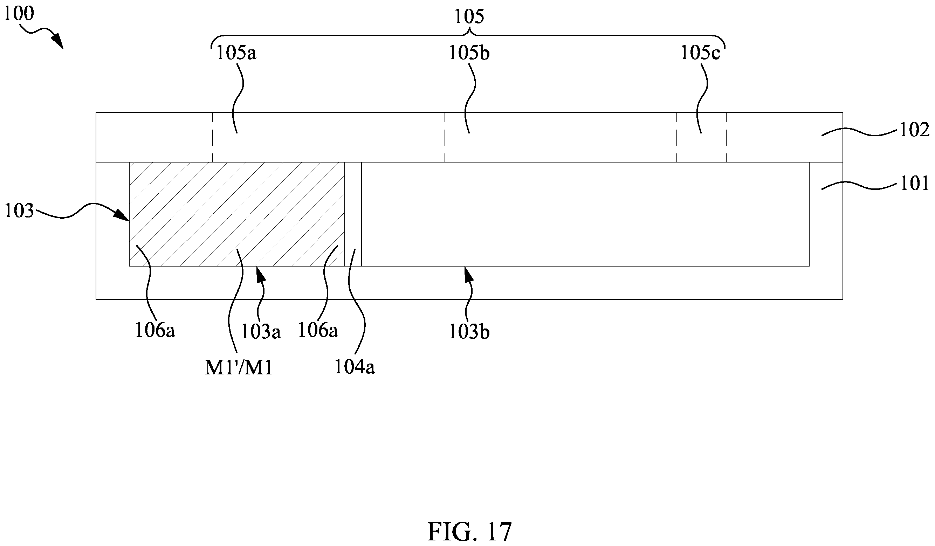

FIGs. 17-21 are schematic cross-sectional views illustrating exemplary stages in the injection molding method 20 of FIG. 2 according to a third embodiment of the present disclosure. In the third embodiment, the second partition 104b and the third component M3 are removed. Therefore, no third sub-cavity 103c is present within the mold cavity 103, and the third component M3 is absent in the article 107. In some embodiments, the first partition 104a and one of the first component M1 and the second component M2 are removed.

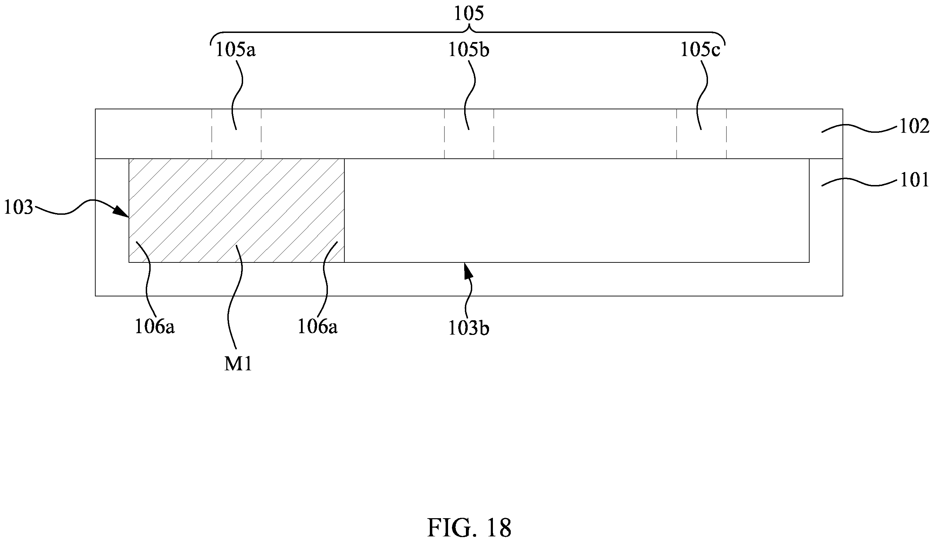

In FIG. 17, the first mixture M1' is injected into the first sub-cavity 103a through the first feeding port 105a, as described in the operation 5220 of FIG. 2. In some embodiments, the first sub-cavity 103a is defined by the first mold 101, the second mold 102, and the partition 104a. After the formation of the first component M1 as described in the operation S230, the first partition 104a is removed as shown in FIG. 18.

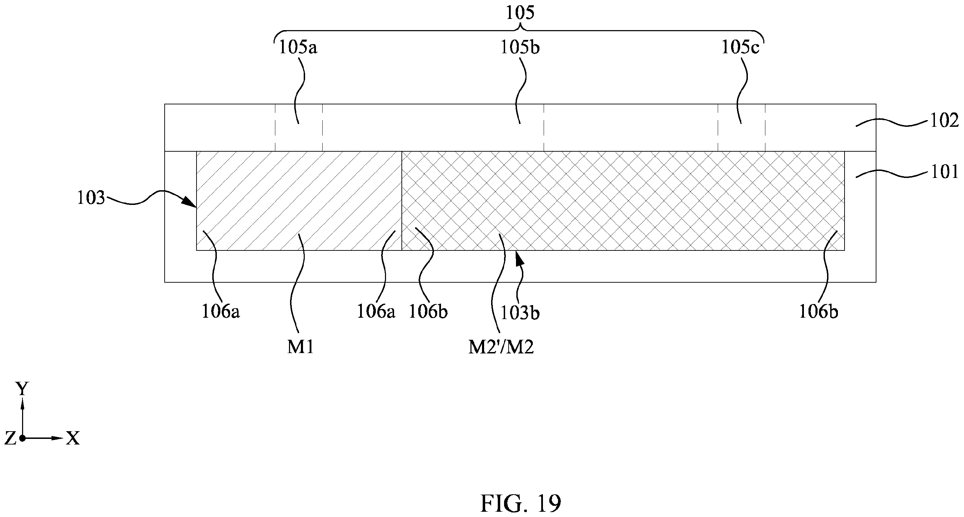

In FIG. 19, after the removal of the first partition 104a, a second mixture M2' is injected into the second sub-cavity 103b through one or more feeding ports 105b and 105c, as described in the operation S240 of FIG. 2. In some embodiments, the second sub-cavity 103b is defined by the first component M1, the first mold 101 and the second mold 102. In some embodiments, the second mixture M2' flows through a second feeding port 105b and a third feeding port 105c in same or different flow rates. In some embodiments, the second mixture M2' undergoes physical foaming to become the second component M2, as described in operation S250 of FIG. 2. In some embodiments, the second component M2 includes a second skin layer 106b adjacent to or in contact with the first component M1. In the embodiment of FIG. 19, the second component M2 has a wider width than the first component M1 in the X-direction.

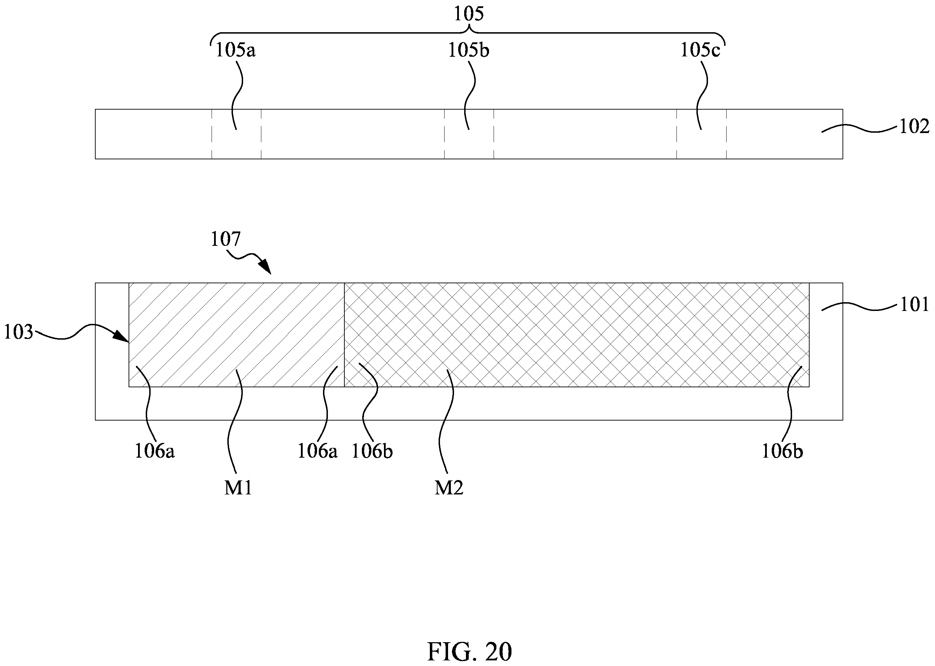

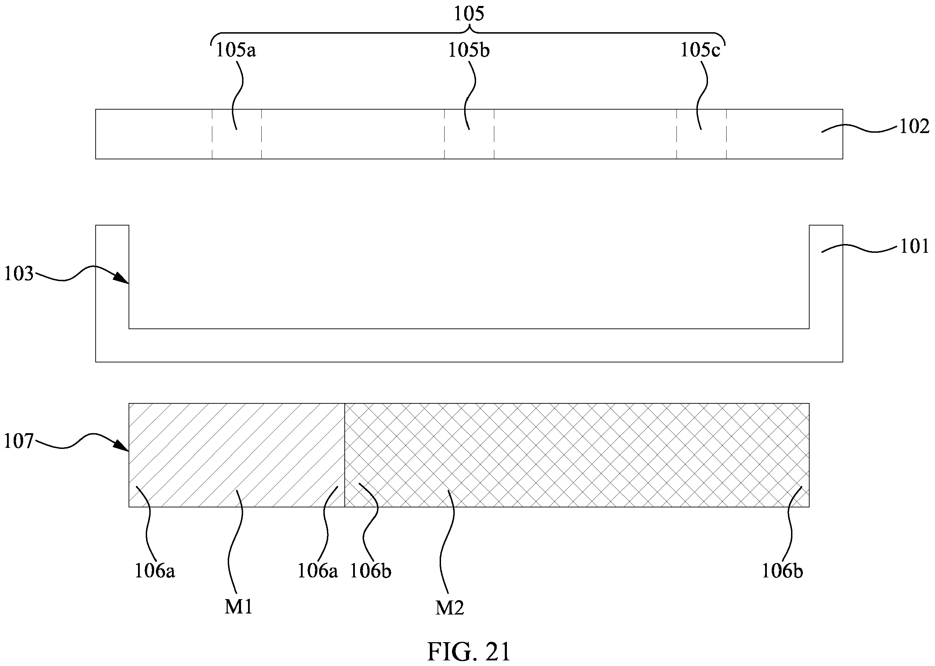

In FIG. 20, an article 107 is formed after the formation of the second component M2. The article 107 is taken out from the mold cavity 103 after the disengagement of the first mold 101 and the second mold 102 as shown in FIG. 21. In some embodiments, the second component M2 is softer than the first component M1. In some embodiments, the first component M1 is denser than the second component M2.

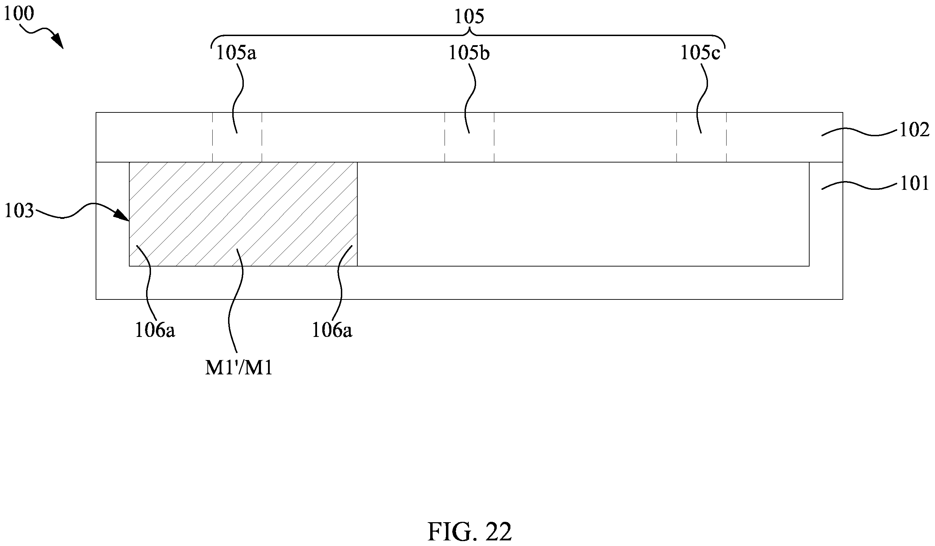

FIGs. 22-26 are schematic cross-sectional views illustrating exemplary stages in the injection molding method 20 of FIG. 2 according to a fourth embodiment of the present disclosure. In the fourth embodiment, the partitions 104 are skipped, i.e., the first partition 104a and the second partition 104b are not disposed in the mold cavity 103.

In FIG. 22, a first mixture M1' is injected into a mold cavity 103 through the first feeding port 105a (in operation 5220 of FIG. 2), and then the first mixture M1' undergoes physical foaming to become a first component M1 (in operation S230 of FIG. 2). In some embodiments, a gas is injected into the mold cavity 103 before the injection of the first mixture M1' to increase a pressure inside the mold cavity 103. After the formation of the first component M1, a first skin layer 106a is formed. In some embodiments, the first skin layer 106a is configured to prevent a mixture subsequently injected into the mold cavity 103 from mixing with the first mixture M1' or the first component M1. In some embodiments, during or after the physical foaming of the first mixture M1', a portion of the gas and/or a portion of the physical blowing agent released from the first mixture M1' is/are discharged out of the mold cavity 103.

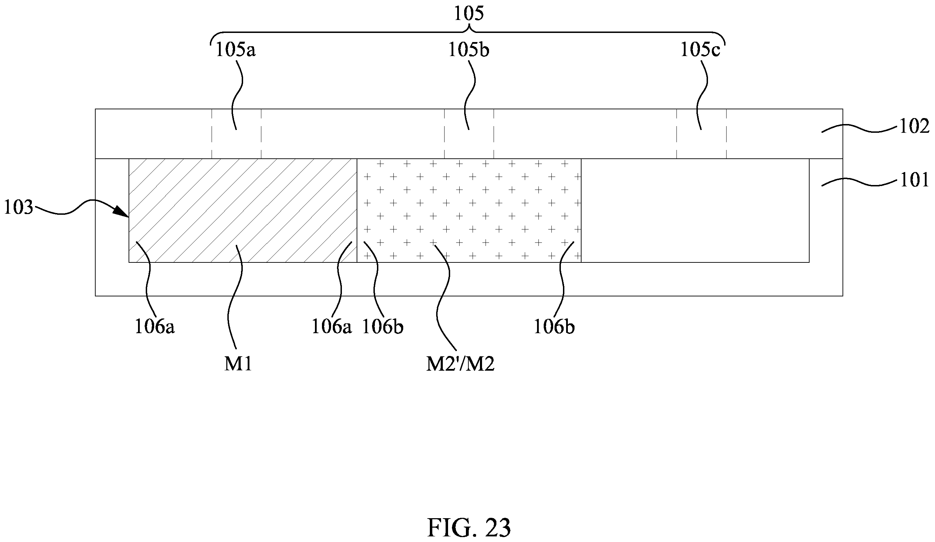

In FIG. 23, after the formation of the first component M1, a second mixture M2' is injected into the mold cavity 103 through the second feeding port 105b, as described in operation S240 of FIG. 2. In some embodiments, a gas is injected into the mold cavity 103 before the injection of the second mixture M2' to increase a pressure inside the mold cavity 103. The second mixture M2' is in contact with the first component M1. The second mixture M2' then undergoes physical foaming to become a second component M2, as described in operation S250 of FIG. 2. After the formation of the second component M2, a second skin layer 106b is formed. In some embodiments, the second skin layer 106b is configured to prevent a mixture subsequently injected into the mold cavity 103 from mixing with the second mixture M2' or the second component M2. In some embodiments, during or after the physical foaming of the second mixture M2', a portion of the gas and/or a portion of the physical blowing agent released from the second mixture M2' is/are discharged out of the mold cavity 103.

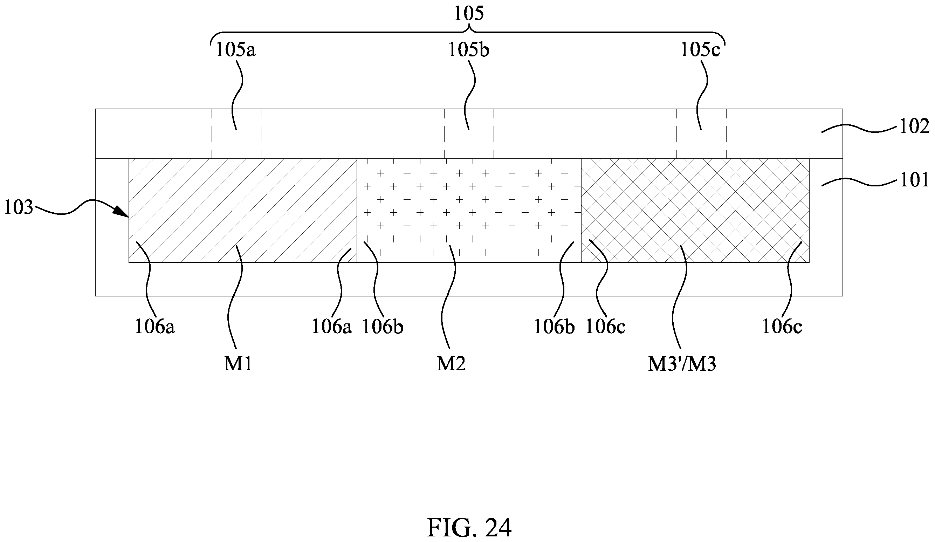

In FIG. 24, after the formation of the second component M2, a third mixture M3' is injected into the mold cavity through the third feeding port 105c, as described in operation S260 of FIG. 2. In some embodiments, a gas is injected into the mold cavity 103 before the injection of the third mixture M3' to increase a pressure inside the mold cavity 103. The third mixture M3' is in contact with the second component M2. The third mixture M3' then undergoes physical foaming to become a third component M3, as described in operation S270 of FIG. 2. After the formation of the third component M3, a third skin layer 106c is formed. In some embodiments, the third skin layer 106c is configured to prevent mixing with the second mixture M2' or the second component M2. In some embodiments, during or after the physical foaming of the third mixture M3', a portion of the gas and/or a portion of the physical blowing agent released from the third mixture M3' is/are discharged out of the mold cavity 103.

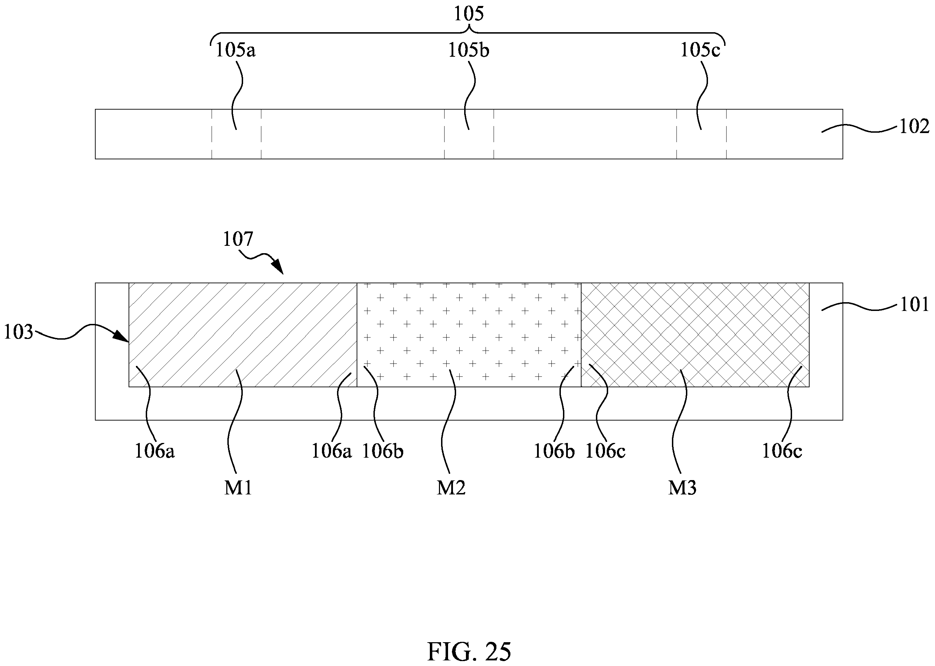

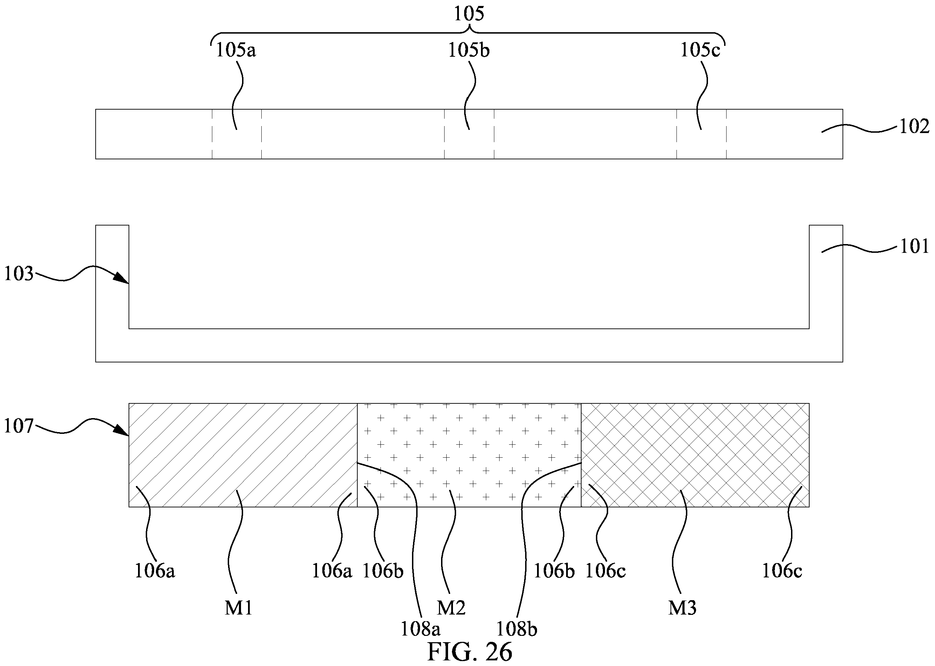

In FIG. 25, an article 107 is formed, and the article 107 can be taken out from the mold cavity 103 after disengagement of the first mold 101 and the second mold 102 as shown in FIG. 26. As described above, the article 107 includes a first visible boundary line 108a between the first component M1 and the second component M2 and a second visible boundary line 108b between the second component M2 and the third component M3.

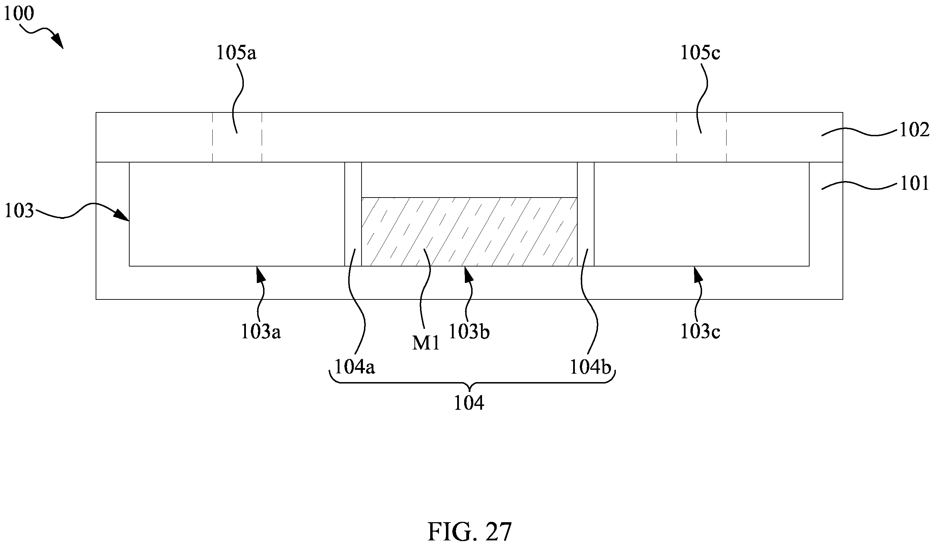

FIGs. 27-31 are schematic cross-sectional views illustrating exemplary stages in the injection molding method 20 of FIG. 2 according to a fifth embodiment of the present disclosure. In the fifth embodiment, the first component M1 is surrounded by the second component M2 in the article 107. In some embodiments, the second feeding port 105b is removed from the second mold 102.

In FIG. 27, the first component M1 is placed into a second sub-cavity 103b defined by the first partition 104a, the second partition 104b, the first mold 101 and the second mold 102. In some embodiments, the first component M1 is temporarily fixed in the second sub-cavity 103b by the first partition 104a and the second partition 104b. Furthermore, a portion of second sub-cavity 103b is not filled with the first component M1.

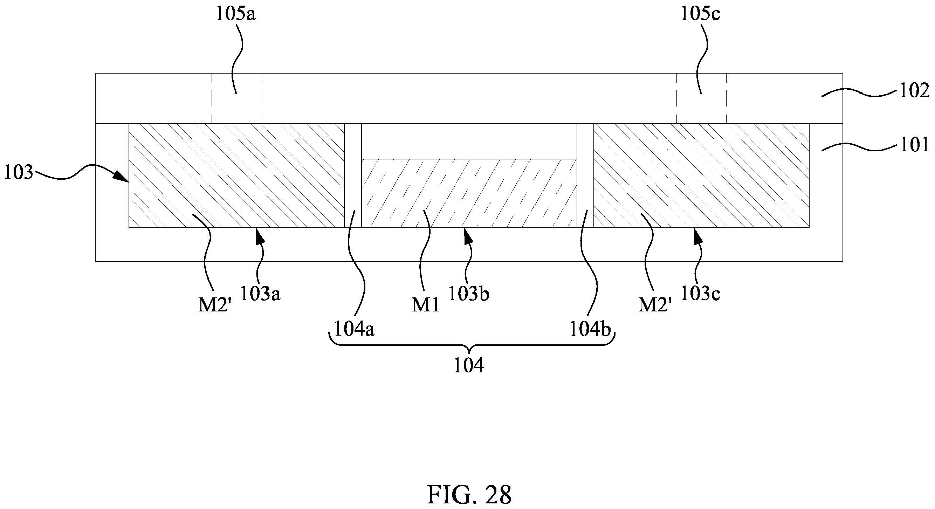

In some embodiments, after the placement of the first component M1, a second mixture M2' is injected into a first sub-cavity 103a and a third sub-cavity 103c as shown in FIG. 28. In some embodiments, a gas is injected into the first sub-cavity 103a and/or the third sub-cavity 103c before the injection of the second mixture M2' to increase a pressure inside the first sub-cavity 103a and/or the third sub-cavity 103c. In some embodiments, the mixture M2' is injected into the first sub-cavity 103a and the third sub-cavity 103c through the first feeding port 105a and the third feeding port 105c respectively. In some embodiments, the mixture M2' is simultaneously injected into the first sub-cavity 103a and the third sub-cavity 103c. In some embodiments, the mixture M2' is sequentially injected into the first sub-cavity 103a and the third sub-cavity 103c.

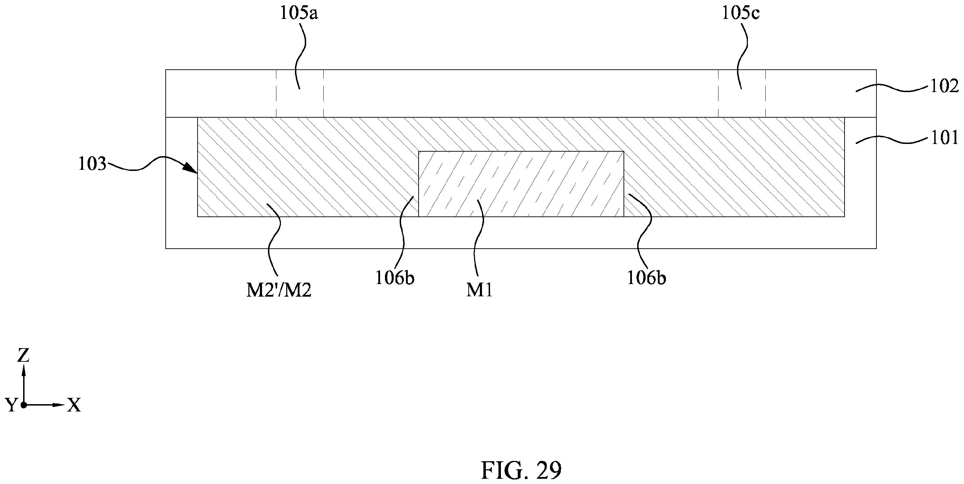

In some embodiments, the first partition 104a and the second partition 104b are withdrawn from the mold cavity 103 when the second mixture M2' almost fills or completely fills the first sub-cavity 103a and the third sub-cavity 103c. In some embodiments, after the withdrawn of the first partition 104a and the second partition 104b, the second mixture M2' flows into the second sub-cavity 103b to contact the first component M1 as shown in FIG. 29. The second mixture M2' then undergoes physical foaming to become a second component M2. After the formation of the second component M2, a second skin layer 106b is formed. In some embodiments, during or after the physical foaming of the second mixture M2', a portion of the gas and/or a portion of the physical blowing agent released from the second mixture M2' is/are discharged out of the mold cavity 103. In fifth embodiment, the second component M2 and the first component M1 have different heights in the Z-direction. A top surface of the first component M1 is lower than a top surface of the second component M2. Furthermore, the second component M2 overlaps the top surface of the first component M1 in the Z-direction (e.g., from a top view of the article 107), and a top surface of the first component M1 is surrounded by the second component M2.

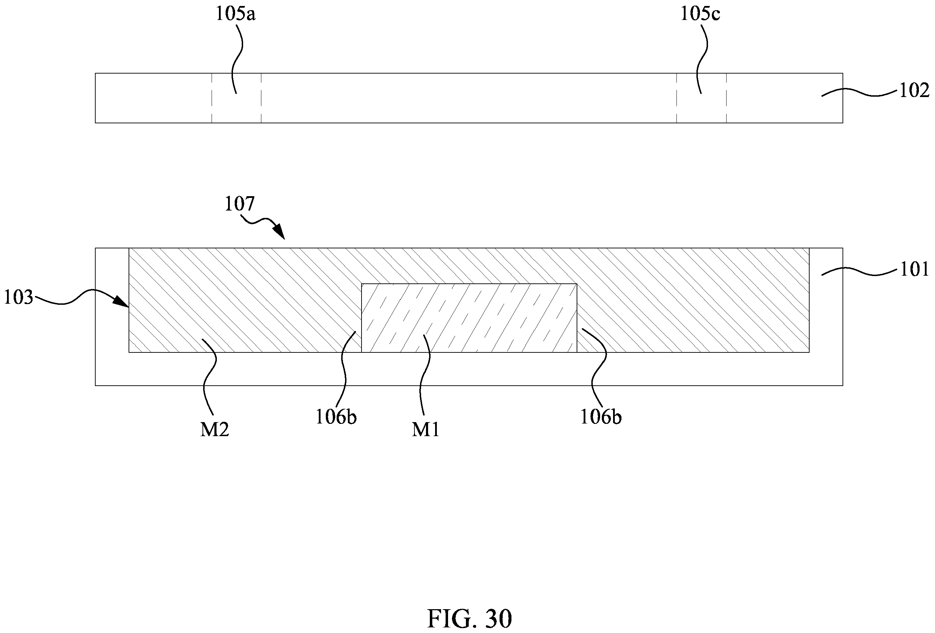

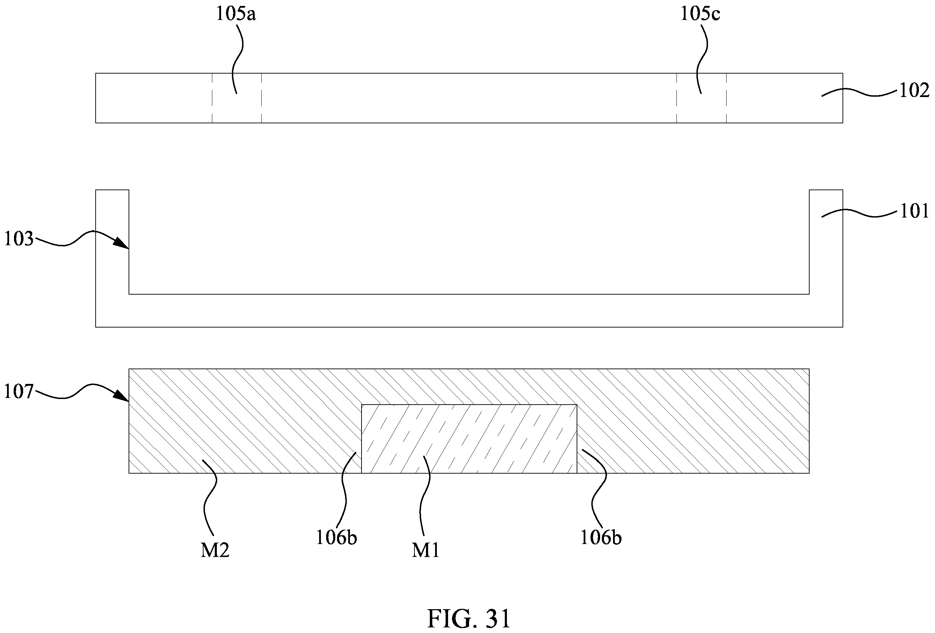

In some embodiments, an article 107 is formed as shown in FIG. 30, and the article 107 can be taken out from the mold cavity 103 after disengagement of the first mold 101 and the second mold 102 as shown in FIG. 31. In some embodiments, the second component M2 is softer than the first component M1. In some embodiments, the first component M1 is denser than the second component M2.

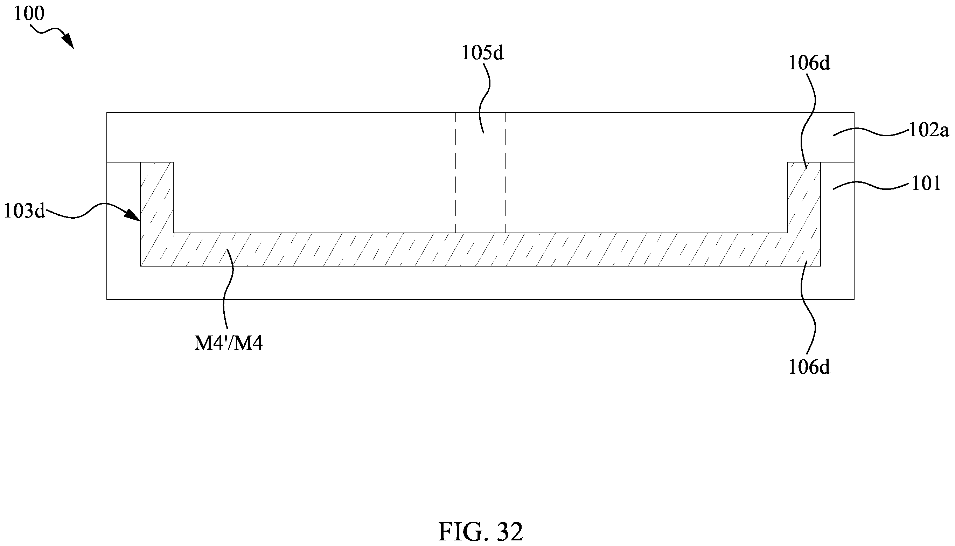

FIGs. 32-39 are schematic cross-sectional views illustrating exemplary stages in the injection molding method 20 of FIG. 2 according to a sixth embodiment of the present disclosure. In the sixth embodiment, the first component M1 is surrounded by the second component M2 in the article 107. In some embodiments, the second feeding port 105b is removed from the second mold 102.

In FIG. 32, the molding device 100 includes a first mold 101 and a second mold 102a engageable with the first mold 101. A fourth mold cavity 103d is formed when the first mold 101 is engaged with the second mold 102a. The fourth mold cavity 103d is defined by the first mold 101 and the second mold 102a. In some embodiments, a fourth mixture M4' is injected into the fourth mold cavity 103d through a fourth feeding port 105d. In some embodiments, a fourth gas is injected into the fourth mold cavity 103d to increase a pressure inside the fourth mold cavity 103d before the injection of the fourth mixture M4'. In some embodiments, the fourth mixture M4' includes polymeric material (such as thermoplastic polyurethane (TPU), polyurethane (PU), plastics or the like) and physical blowing agent (such as gaseous nitrogen, carbon dioxide, supercritical fluid or the like). In some embodiments, the fourth mixture M4' is foamable or slightly foamable.

In some embodiments, after the injection of the fourth mixture M4', the fourth mixture M4' undergoes physical foaming within the fourth mold cavity 103d to become a fourth component M4. In some embodiments, during the physical foaming of the fourth mixture M4' and/or after the formation of the fourth component M4, the pressure inside the fourth mold cavity 103d is reduced by discharging at least a portion of the fourth gas out of the fourth mold cavity 103d and/or discharging a portion of the physical blowing agent released from the fourth mixture M4' out of the fourth mold cavity 103d. In some embodiments, after the physical foaming of the fourth mixture M4', the fourth component M4 having a fourth skin layer 106d is formed. The fourth skin layer 106d has higher density than a central part of the fourth component M4. The fourth skin layer 106d has lesser degree of physical foaming than the central part. In some embodiments, the fourth skin layer 106d has a thickness of less than 0.5mm.

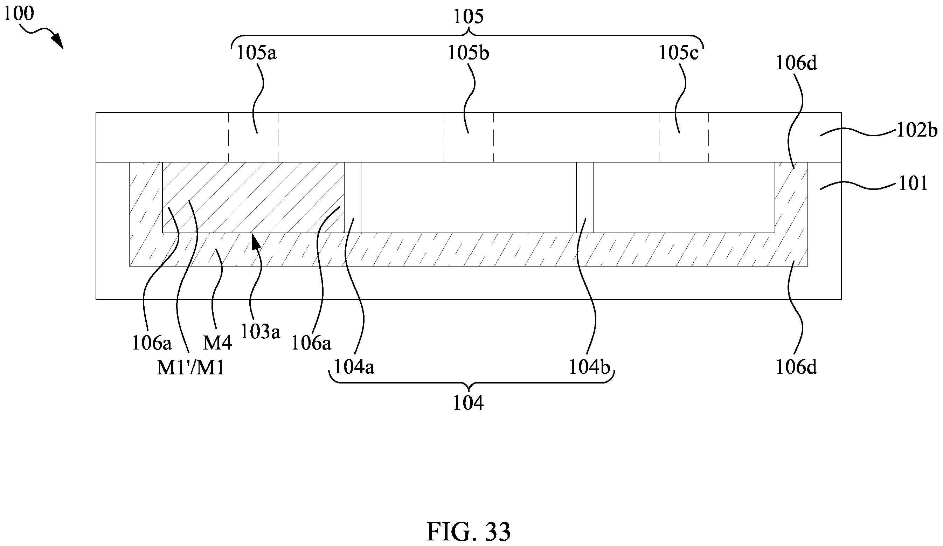

In FIG. 33, after the formation of the fourth component M4, the second mold 102a is removed and then replaced by a third mold 102b. In some embodiments, the first partition 104a and the second partition 104b extend between the fourth component M4 and the third mold 102b. In some embodiments, the first partition 104a and the second partition 104b are extendable and retractable from the third mold 102b. In some embodiments, the mold cavity 103 is further defined by the fourth component M4 disposed in the first mold 101 and the third mold 102b.

In FIG. 33, after the disposing of the first partition 104a, a first mixture M1' is injected into a first sub-cavity 103a through a first feeding port 105a, as described in the operation 5220 of FIG. 2. In some embodiments, the first sub-cavity 103a is defined by the third mold 102b, the fourth component M4 and the first partition 104a.

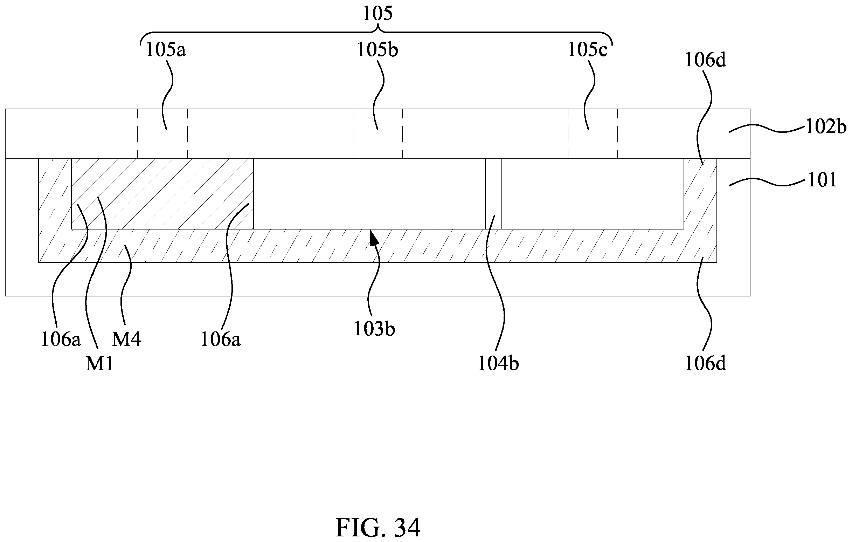

In some embodiments, a first gas is injected into a first sub-cavity 103a to increase a pressure inside the first sub-cavity 103a before the injection of the first mixture M1'. In some embodiments, after the injection of the first mixture M1', the first mixture M1' undergoes physical foaming within the first sub-cavity 103a to become a first component M1, as described in the operation S230 of FIG. 2. In some embodiments, after the formation of the first component M1, the first partition 104a is removed as shown in FIG. 34.

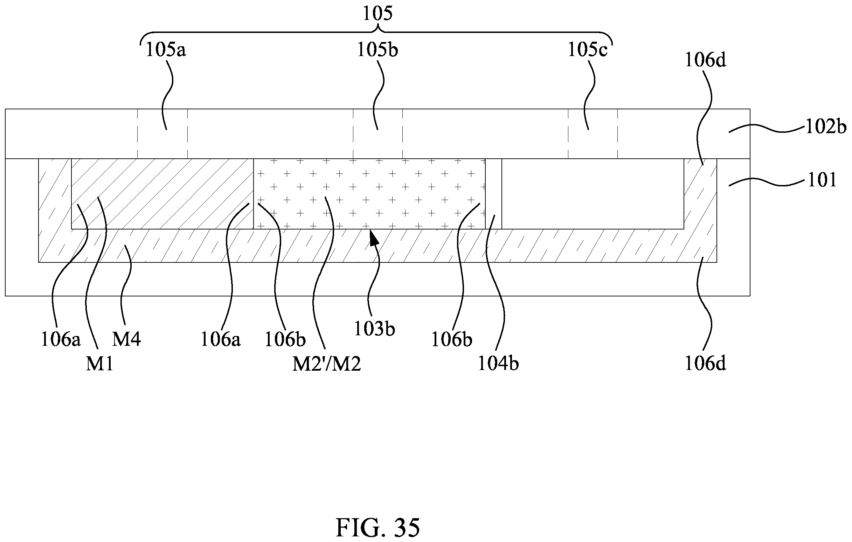

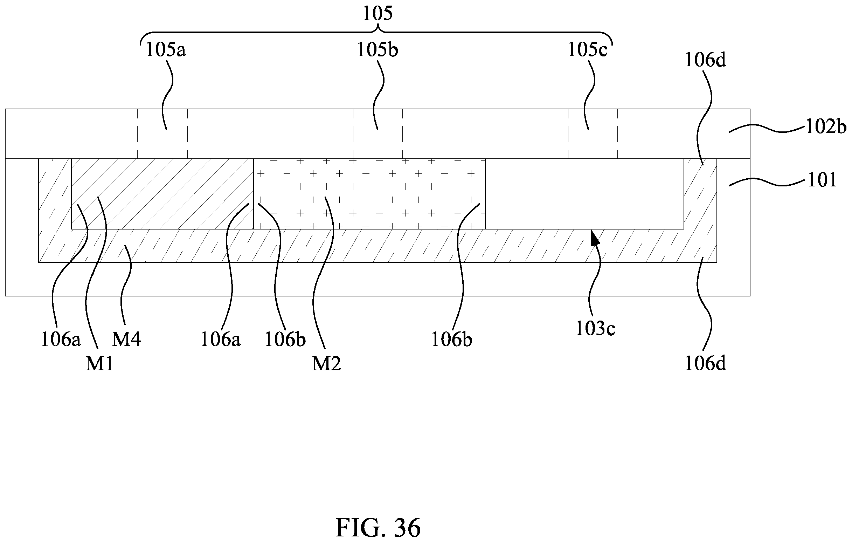

In FIG. 35, a second mixture M2' is injected into a second sub-cavity 103b through a second feeding port 105b, as described in operation S240 of FIG. 2. In some embodiments, a second gas is injected into the second sub-cavity 103b to increase a pressure inside the second sub-cavity 103b before the injection of the second mixture M2'. In some embodiments, the second sub-cavity 103b is defined by the first component M1, the fourth component M4, the second partition 104b, and the third mold 102b. In some embodiments, after the injection of the second mixture M2', the second mixture M2' undergoes physical foaming within the second sub-cavity 103b to become a second component M2, as described in operation S250 of FIG. 2. In some embodiments, after the formation of the second component M2, the second partition 104b is removed as shown in FIG. 36.

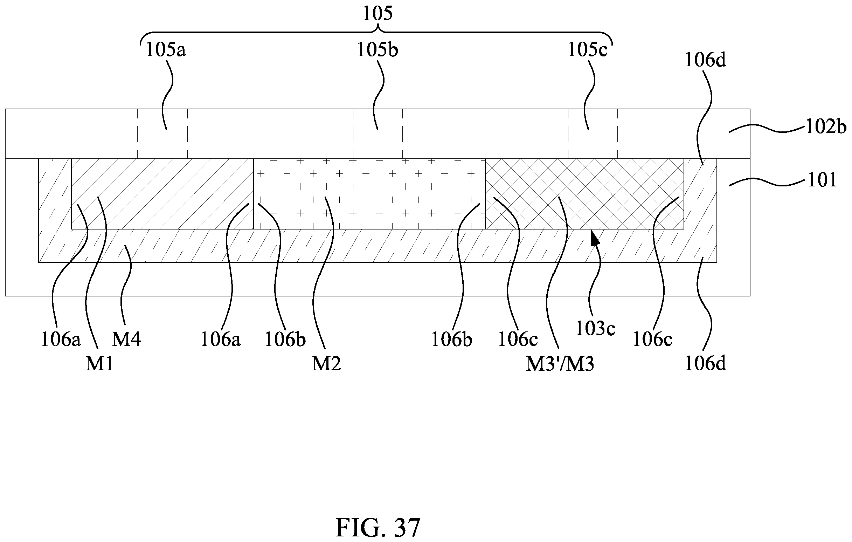

In FIG. 37, after the formation of the second component M2, a third mixture M3' is injected into a third sub-cavity 103c through a third feeding port 105c, as described in operation S260 of FIG. 2. In some embodiments, the third sub-cavity 103c is defined by the second component M2, the fourth component M4 and the third mold 102b. In some embodiments, a third gas is injected into the third sub-cavity 103c to increase a pressure inside the third sub-cavity 103c before the injection of the third mixture M3'. In some embodiments, after the injection of the third mixture M3', the third mixture M3' undergoes physical foaming within the third sub-cavity 103c to become a third component M3, as described in operation S270 of FIG. 2.

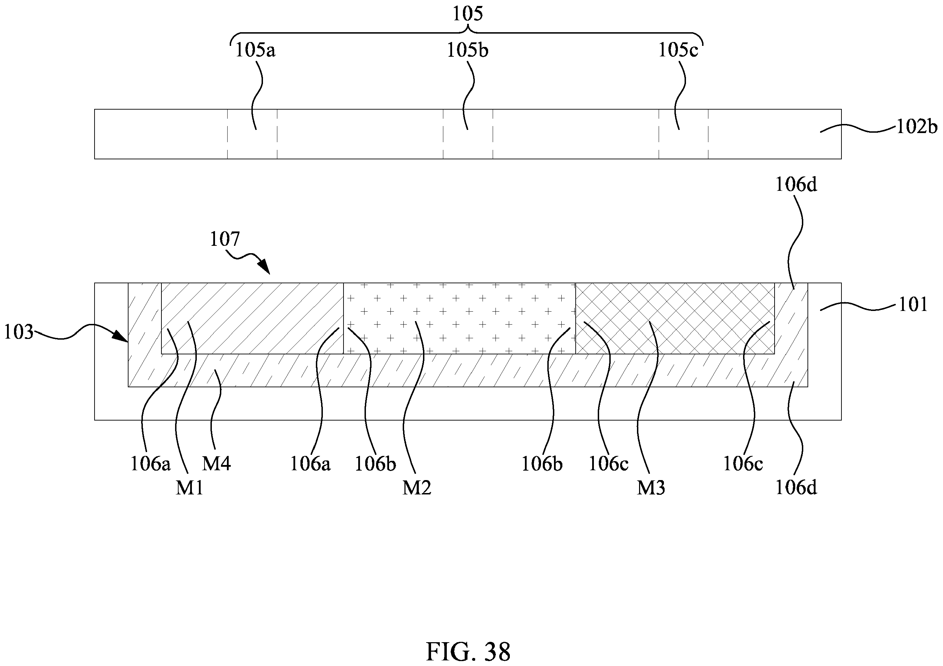

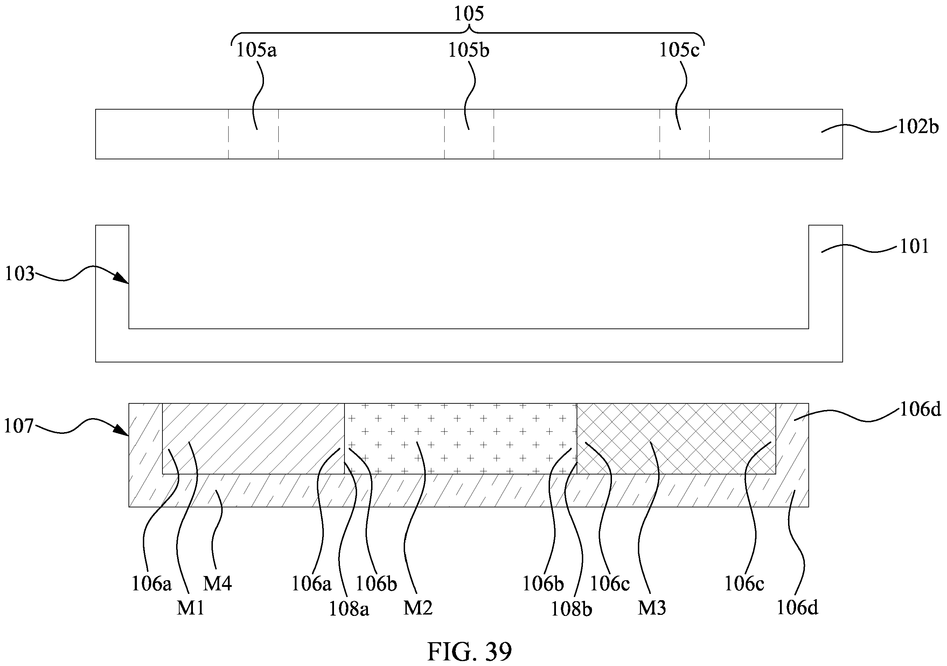

In some embodiments, after the formation of the third component M3, the first mold 101 is disengaged with the third mold 102b as shown in FIG. 38. After the formation of the third component M3, an article 107 having the first component M1, the second component M2, the third component M3 and the fourth component M4 is formed as shown in FIG. 39. The article 107 is formed within a mold cavity defined by the first mold 101 and the third mold 102b. In some embodiments, after the disengagement of the first mold 101 and the third mold 102b, the article 107 is taken out from the mold cavity as shown in FIG. 39.

In some embodiments, the first component M1 is directly attached to the second component M2, and the second component M2 is directly attached to the third component M3. In other words, no additional component or material (such as adhesive or the like) is disposed between the first component M1 and the second component M2, and between the second component M2 and the third component M3. In some embodiments, the fourth component M4 is separable/detachable from the first component M1, the second component M2 and the third component M3. In some embodiments, the fourth component M4 has protrusion/recess engageable with recess/protrusion of the first component M1, recess/protrusion of the second component M2 and/or recess/protrusion of the third component M3, so that the fourth component M4 is attachable to the first component M1, the second component M2 and/or the third component M3.

In some embodiments, the fourth skin layer 106d is in contact with the bottom surfaces of the components M1, M2 and M3. The second component M2 is surrounded by the first component M1, the fourth component M4 and the third component M3. The first component M1 is surrounded by the fourth component M4 and the second component M2. A lateral surface (e.g., the first skin layer 106a on the left side) of the first component M1 is in contact with the fourth skin layer 106d of the fourth component M4. Moreover, the third component M3 is surrounded by the fourth component M4 and the second component M2. A lateral surface (e.g., the third skin layer 106c on the right side) of the third polymeric component is in contact with the fourth skin layer 106d of the fourth component M4.

In some embodiments, the article 107 includes a visible boundary line between two adjacent components. For example, a first visible boundary line 108a is present between the first component M1 and the second component M2, and a second visible boundary line 108b is present between the second component M2 and the third component M3. In some embodiments, the first visible boundary line 108a and the second visible boundary line 108b are respectively a straight line, a curve, a spline, a polyline, etc. from a top view of the article 107.

In some embodiments, the article 107 has various densities or hardnesses. In some embodiments, the fourth component M4 is harder and denser than the first component M1, the second component M2 and the third component M3. In some embodiments, the third component M3 is softer than the second component M2 and the first component M1. In some embodiments, the first component M1 is denser than the second component M2 and the third component M3.

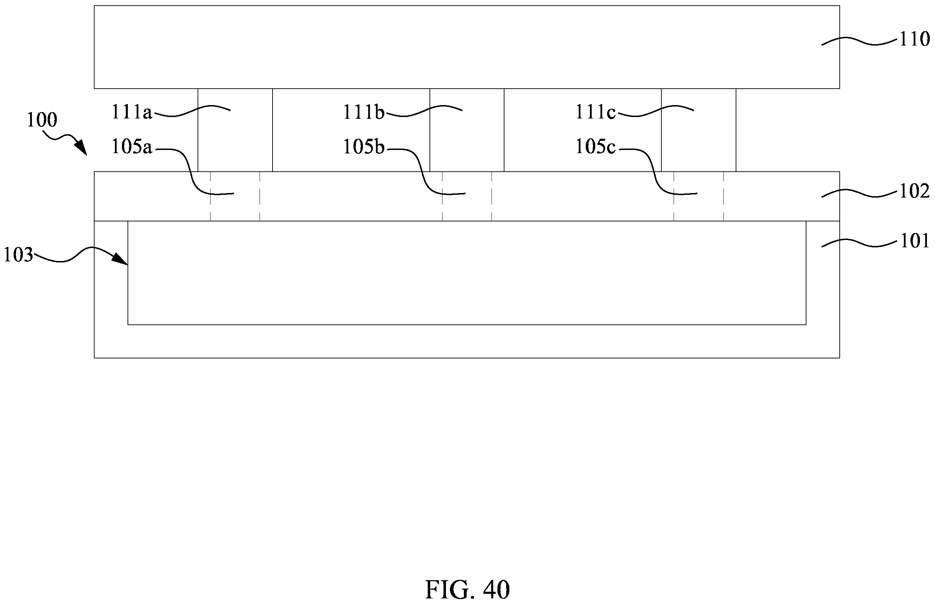

FIGs. 40-43 are schematic cross-sectional views illustrating exemplary stages in the injection molding method 20 of FIG. 2 according to a seventh embodiment of the present disclosure. In the seventh embodiment, the operations of the injection unit 110 are shown.

As described above, the injection molding system 10 includes the mixing unit 120, the injection unit 110 and the molding device 100. The mixing unit 120 is configured to produce a mixture of a polymeric material and a physical blowing agent. The mixture is then delivered to the injection unit 110.

In FIG. 40, the injection unit 110 is configured to discharge the mixture. The mixture is then discharged out through one or more discharging channels 111a, 111b and 111c of the injection unit 110 engaged with the molding device 100. The mixture can flow from the injection unit 110 into the molding device 100. In some embodiments, the mixture can flow from the injection unit 110 into the mold cavity 103 through the discharging channels 111a, 111b and 111c and the feeding ports 105a, 105b and 105c. In some embodiments, each discharging channel corresponds to individual feeding port. For example, the discharging channels 111a, 111b and 111c correspond to the feeding ports 105a, 105b and 105c, respectively. In some embodiments, no partition 104 is disposed in the mold cavity 103.

In some embodiments, a flow rate allowing the mixture flowing out from each of the discharging channels 111a, 111b and 111c is individually adjustable. In some embodiments, a quantity of the mixture flowing out from each of the discharging channels 111a, 111b and 111c is individually adjustable. In some embodiments, the flow rate or the quantity of the mixture flowing out from each of the discharging channels 111a, 111b and 111c are controlled by a central processor (not shown).

In some embodiments, the flow rate/quantity of the mixture flowing out from each of the discharging channels 111a, 111b and 111c can synchronize with each other. For example, the flow rate/quantity of the mixture flowing out from the discharging channel 111a is (manually or automatically) set or determined, then the flow rate/quantity of the mixture flowing out from each of the rest of the discharging channels 111b and 111c are automatically set to be the same as the flow rate/quantity of the mixture flowing out from the discharging channel 111a. As a result, the flow rate/quantity of the mixture flowing out from each of the discharging channels 111a, 111b and 111c are synchronous. In some embodiments, such synchronization is automatically executed by the central processor.

In some embodiments, the flow rate/quantity of the mixture flowing out from one of the discharging channels 111a is (manually or automatically) set to a predetermined rate/amount, then the flow rate/quantity of the mixture flowing out from each of the rest of the discharging channels 111b and 111c are adjusted based on the predetermined rate/amount (to be the same or different). As a result, the flow rate/quantity of the mixture flowing out from each of the discharging channels 111a, 111b and 111c are correlated with each other. In some embodiments, such adjustment is automatically and promptly executed by the central processor. For example, if the flow rate/quantity of the mixture flowing out from one of the discharging channels 111a is (manually or automatically) changed, then the flow rate/quantity of the mixture flowing out from each of the rest of the discharging channels 111b and 111c are also changed promptly.

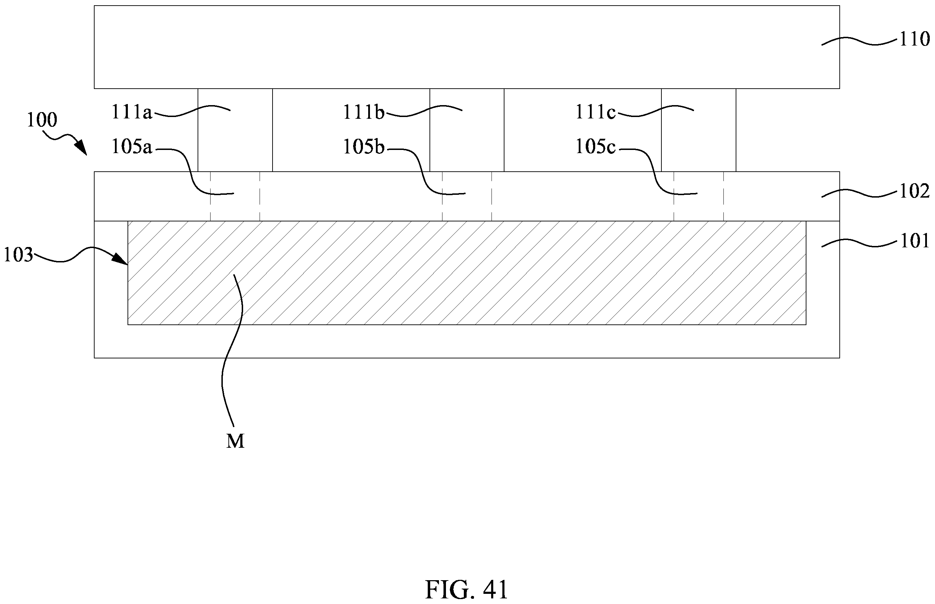

In some embodiments, the mixture flowing out from each of the discharging channels 111a, 111b and 111c are in the same or different material. In some embodiments, the mixture flowing out from each of the discharging channels 111a, 111b and 111c are in the same or different physical properties (such as density, hardness and so on). In some embodiments, the discharging channels 111a, 111b and 111c flow out same mixture M' into the mold cavity 103 as shown in FIG. 41.

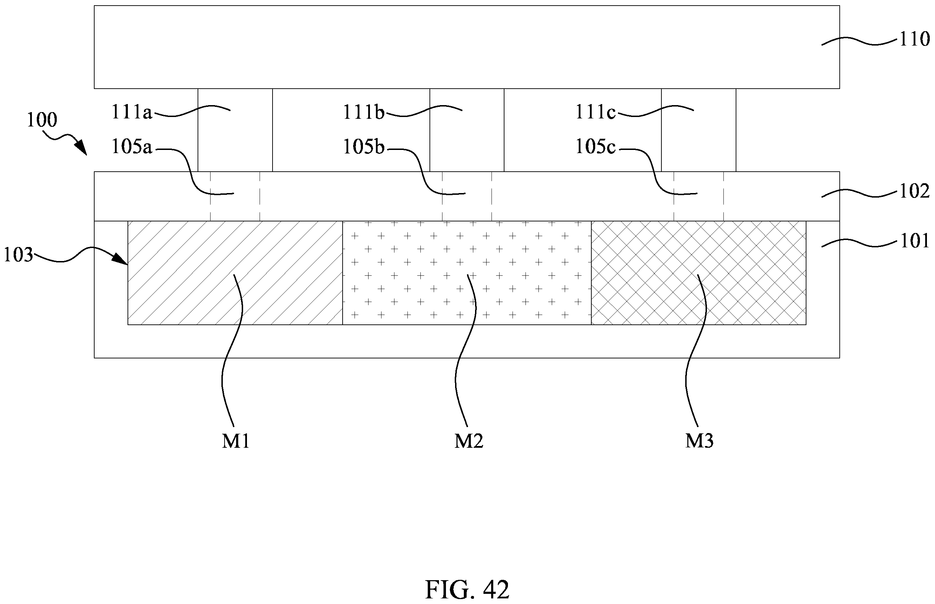

In some embodiments, the discharging channels 111a, 111b and 111c flow out the different mixtures M1', M2' and M3' respectively but in same flow rate/quantity into the mold cavity 103 as shown in FIG. 42, e.g., the operations S220, S240 and S260 are performed simultaneously. In some embodiments, the flow rate/quantity of the mixture M1' flowing out from the discharging channel 111a is set, and the flow rates/quantities of the mixtures M2' and M3' flowing out from the discharging channels 111b and 111c respectively are set to be the same as the flow rate/quantity of the mixture M1' flowing out from the discharging channel 111a by the central processor.

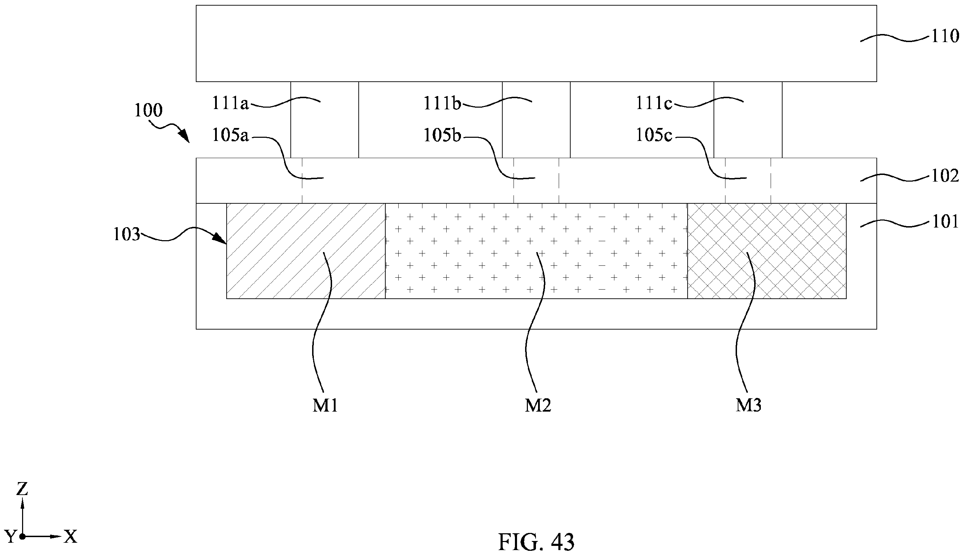

In some embodiments, the discharging channels 111a, 111b and 111c flow out mixtures M1', M2' and M3' in different quantities into the mold cavity 103 as shown in FIG. 43. For example, the flow rate/quantity of the mixture M1' flowing out from the discharging channel 111a is set, then the flow rate/quantity of the mixtures M2' and M3' flowing out from the discharging channels 111b and111c respectively are set based on the flow rate/quantity of the mixture M1' flowing out from the discharging channel 111a by the central processor. Furthermore, if the flow rate/quantity of the mixture M2' is greater than the flow rate/quantity of the mixtures M1' and M3', the second component M2 has a wider width than the first component M1 and the third component M3 in the X-direction.

Similar to the seventh embodiment, the flow rates/quantities of the mixtures M1', M2' and M3' in the first through sixth embodiments can be controlled by the central processor, so that the flow rates/quantities of the first, second and third mixtures are the same or different.

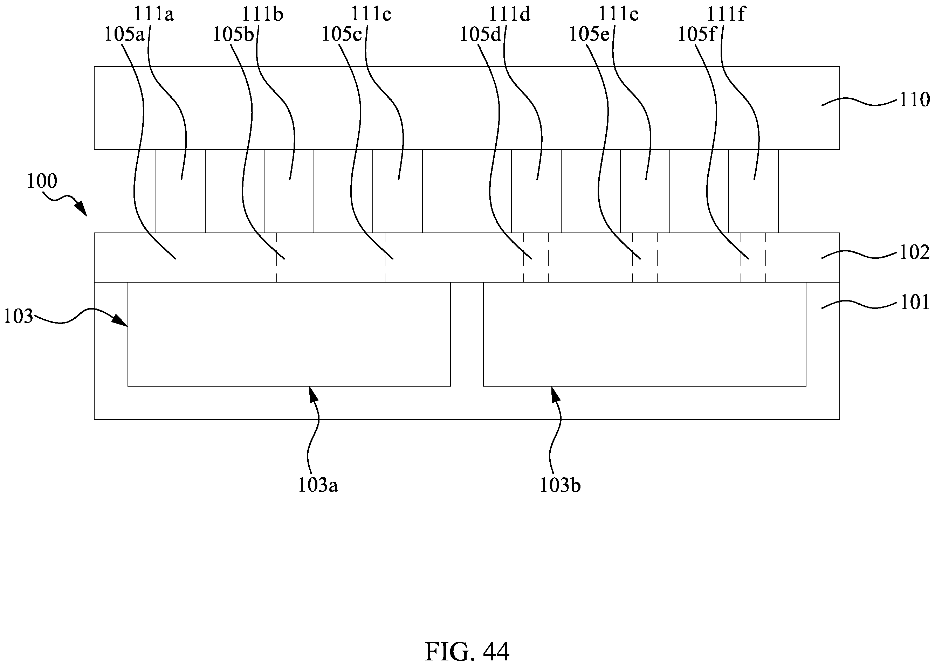

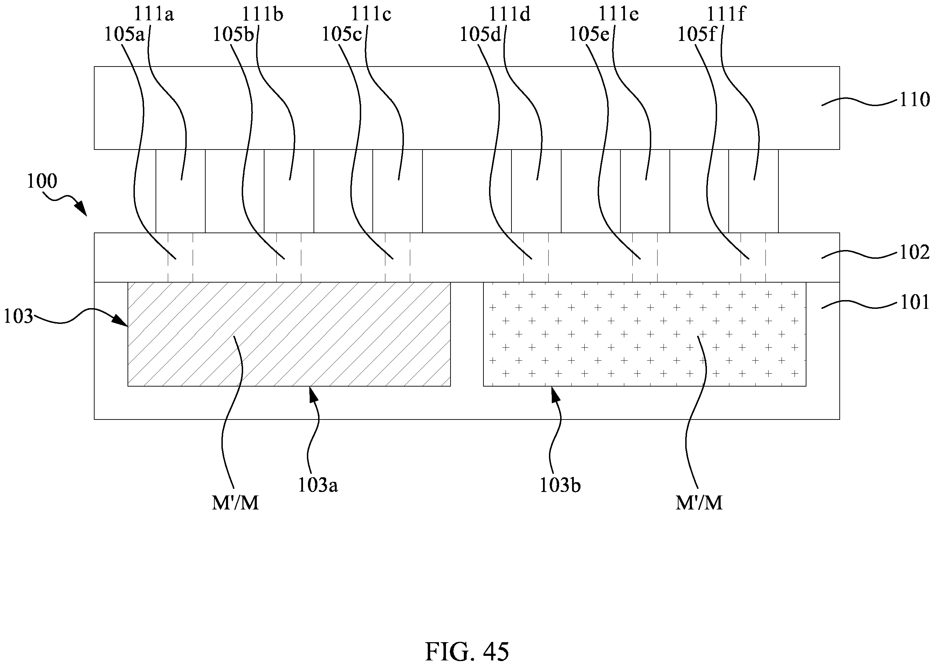

FIGs. 44 and 45 are schematic cross-sectional views illustrating exemplary stages in the injection molding method 20 of FIG. 2 according to an eighth embodiment of the present disclosure. In the eighth embodiment, the operations of the injection unit 110 are shown.

In FIG. 44, the injection unit 110 is configured to discharge the mixture. The mixture is discharged out through one or more discharging channels 111a, 111b, 111c, 111d, 111e and 111f of the injection unit 110 engaged with the molding device 100. The mixture can flow from the injection unit 110 into the molding device 100. In some embodiments, the mixture can flow from the injection unit 110 into the mold cavity 103 through the discharging channels 111a, 111b, 111c, 111d, 111e and 111f and the feeding ports 105a, 105b, 105c, 105d, 105e and 105f respectively.

The molding device 100 includes a mold cavity 103 defined by the first mold 101 and the second mold 102. In some embodiments, the mold cavity 103 includes a first sub-cavity 103a and a second sub-cavity 103b separated from the first sub-cavity 103a. The first sub-cavity 103a is not communicable with the second sub-cavity 103b. In some embodiments, a volume of the first sub-cavity 103a is substantially same as a volume of the second sub-cavity 103b. In some embodiments, the first sub-cavity 103a is communicable with three feeding ports 105a, 105b and 105c, and the second sub-cavity 103b is communicable with three feeding ports 105d, 105e and 105f. However, it is not intended to limit the number of feeding ports corresponding to one sub-cavity.

In some embodiments, if one of the discharging channels 111a, 111b, 111c, 111d, 111e and 111f is set or adjusted, the rest of the discharging channels 111a, 111b, 111c, 111d, 111e and 111f are then also adjusted accordingly. In some embodiments, the adjustment of the rest of the discharging channels 111a, 111b, 111c, 111d, 111e and 111f is performed immediately after the setting/adjustment of the one of the discharging channels 111a, 111b, 111c, 111d, 111e and 111f. In some embodiments, such subsequent adjustment is automatically and promptly executed by a central processor (not shown).

For example, a parameter (e.g. flow rate, quantity of mixture, injection force provided to the mixture to discharge out, or the like) associated with the discharging channel 111a is set to a first value, a parameter associated with another discharging channel 111d is then adjusted based on the first value. In some embodiments, the parameter associated with the discharging channel 111a is correlated to the parameter associated with another discharging channel 111d in a first ratio, therefore the parameter associated with another discharging channel 111d can be derived based on the first ratio and thus can be adjusted to a result derived. For example, if the first ratio is 1, the parameter associated with the discharging channel 111d would be adjusted to be same as the parameter associated with the discharging channel 111a.

In some embodiments, if the parameter associated with the discharging channel 111a is adjusted, then the parameters of the discharging channels 111b and 111c are adjusted accordingly. In some embodiments, the parameter associated with the discharging channel 111a is correlated to the parameter of the discharging channel 111b in a second ratio. For example, when the parameter associated with the discharging channel 111a is set to the first value, then the parameter of the discharging channel 111b is adjusted according to the first value and the second ratio. In some embodiments, the parameter associated with the discharging channel 111a is correlated to the parameter associated with the discharging channel 111c in a third ratio. For example, when the parameter associated with the discharging channel 111a is set to the first value, then the parameter of the discharging channel 111c is adjusted according to the first value and the third ratio. Alternatively, in some embodiments, the parameter associated with the discharging channel 111b is correlated with the parameter associated with the discharging channel 111c in a fourth ratio. As such, after obtaining the parameter associated with the discharging channel 111b, the parameter associated with the discharging channel 111c according to the fourth ratio.

Similarly, in some embodiments, if the parameter associated with the discharging channel 111d is adjusted, then parameters of the discharging channels 111e and 111f are adjusted accordingly. In some embodiments, the parameter associated with the discharging channel 111d is correlated to the parameter associated with the discharging channel 111e in a fifth ratio. For example, when the parameter associated with the discharging channel 111d is set to a second value, then the parameter of the discharging channel 111e is adjusted according to the second value and the fifth ratio. In some embodiments, the parameter associated with the discharging channel 111d is correlated to the parameter of the discharging channel 111f in a sixth ratio. For example, when the parameter associated with the discharging channel 111d is set to the second value, then the parameter of the discharging channel 111f is adjusted according to the second value and the sixth ratio. Alternatively, in some embodiments, the parameter associated with the discharging channel 111e is correlated with the parameter associated with the discharging channel 111f in a seventh ratio. As such, after obtaining the parameter associated with the discharging channel 111e, the parameter associated with the discharging channel 111f is adjusted according to the seventh ratio.

In some embodiments, the mixture M' is then discharged out of the discharging channels 111a, 111b, 111c, 111d, 111e and 111f and entered into the sub-cavities 103a and 103b correspondingly through the feeding ports 105a, 105b, 105c, 105d, 105e and 105f respectively as shown in FIG. 45. The mixture is discharged according to the adjustment result described above. In some embodiments, after the injection of the mixture M', the mixture M' undergoes physical foaming within sub-cavities 103a and 103b respectively to become components M. In some embodiments, the components M have substantially same size, weight, density, etc.

According to the embodiments of the present disclosure, the injection molding method is used to form an article with multiple hardness/densities. By removing the partitions 104 and/or controlling the flow rates of the mixtures, the mixtures with different physical properties are injected into the mold cavity 103 to form the article 107, thereby decreasing manufacturing time of the article including more than one portion having different physical or functional properties.

The foregoing outlines features of several embodiments so that those skilled in the art may better understand the aspects of the present disclosure. Those skilled in the art should appreciate that they may readily use the present disclosure as a basis for designing or modifying other processes and structures for carrying out the same purposes and/or achieving the same advantages of the embodiments introduced herein. Those skilled in the art should also realize that such equivalent constructions do not depart from the spirit and scope of the present disclosure, and that they may make various changes, substitutions, and alterations herein without departing from the spirit and scope of the present disclosure.

Moreover, the scope of the present application is not intended to be limited to the particular embodiments of the process, machine, manufacture, composition of matter, means, methods and steps described in the specification. As one of ordinary skill in the art will readily appreciate from the disclosure of the present disclosure, processes, machines, manufacture, compositions of matter, means, methods, or steps, presently existing or later to be developed, that perform substantially the same function or achieve substantially the same result as the corresponding embodiments described herein, may be utilized according to the present disclosure. Accordingly, the appended claims are intended to include within their scope such processes, machines, manufacture, compositions of matter, means, methods and steps.

## Claims

1. An injection molding method, comprising:
providing a molding device including a first mold, a second mold over the first mold and a mold cavity defined by the first mold and the second mold;
injecting a first mixture into the mold cavity through a first feeding port;
forming a first component from the first mixture;
injecting a second mixture into the mold cavity through a second feeding port; and
forming a second component from the second mixture,
wherein the second component is at least partially in contact with the first component, and the first component and the second component have different physical properties.

2. The injection molding method of Claim 1, further comprising:
dividing the mold cavity into a first sub-cavity and a second sub-cavity by a first partition,
wherein the first partition is removable, and the first sub-cavity of the mold cavity is defined by the first mold, the second mold and the first partition.

3. The injection molding method of Claim 2, further comprising:
removing the first partition from the mold cavity before the injecting the second mixture into the second sub-cavity of the mold cavity,
wherein before the removing the first partition from the mold cavity, the first component is at least partially in contact with the first partition, and the second sub-cavity of the mold cavity is defined by the first mold, the second mold and the first component.

4. The injection molding method of Claim 1, further comprising:
dividing the mold cavity into a first sub-cavity, a second sub-cavity and a third sub-cavity by a first partition and a second partition, wherein the first partition and the second partition are removable, the first sub-cavity is defined by the first mold, the second mold and the first partition, and the second sub-cavity is defined by the first mold, the second mold and the second partition;
removing the first partition from the mold cavity before the injecting the second mixture into the second sub-cavity of the mold cavity, wherein before the removing the first partition from the mold cavity, the first component is at least partially in contact with the first partition;
removing the second partition from the mold cavity after the injecting the second mixture into the second sub-cavity of the mold cavity; and
injecting a third mixture through a third feeding port into the third sub-cavity defined by the first mold, the second mold and the second component.

5. The injection molding method of any one of Claims 1 to 4, further comprising:
controlling the first mixture to flow through the first feeding port and the second mixture to flow through the second feeding port at the same or different flow rates.

6. The injection molding method of any one of Claims 1 to 5, further comprising:
providing the molding device including the first mold and a third mold over the first mold;
injecting a fourth mixture into another mold cavity defined by the first mold and the third mold through a third feeding port disposed at the third mold;
forming a third component from the fourth mixture; and
replacing the third mold by the second mold before the injecting the first mixture into the mold cavity through the first feeding port,
wherein the mold cavity is further defined by the second mold and the third component disposed in the first mold.

7. The injection molding method of any one of Claims 1 to 6, wherein a central part of the first component undergoes a higher degree of physical forming than a peripheral part of the first component during the forming the first component from the first mixture.

8. An injection molding method, comprising:
providing a molding device including a first mold, a second mold over the first mold and a mold cavity defined by the first mold and the second mold;
injecting a first mixture into the mold cavity through a first feeding port;
forming a first component from the first mixture;
injecting a second mixture into the mold cavity through a second feeding port; and
forming a second component from the second mixture,
wherein the second component is separated from the first component, and the first component and the second component have different physical properties.

9. The injection molding method of Claim 8, further comprising:
dividing the mold cavity into a first sub-cavity and a second sub-cavity by a first partition and a second partition,
wherein the first partition and the second partition are removable, and
the first sub-cavity of the mold cavity is defined by the first mold, the second mold and the first partition, and the second sub-cavity of the mold cavity is defined by the first mold, the second mold and the second partition.

10. The injection molding method of Claim 9, further comprising:
injecting a third mixture into the mold cavity through a third feeding port; and
forming a third component from the third mixture,
wherein the third component is at least partially in contact with the first component and the second component.

11. An assembly of polymeric components, comprising:
a first polymeric component having a first skin layer; and
a second polymeric component having a second skin layer in contact with the first skin layer,
wherein a density of the first skin layer is greater than a central part of the first polymeric component, and a density of the second skin layer is greater than a central part of the second polymeric component, and a visible boundary line is present between the first skin layer and the second skin layer.

12. The assembly of Claim 11, wherein the visible boundary line extends over top surfaces of the first and second polymeric components, or the visible boundary line extends from the top surfaces of the first and second polymeric components to bottom surfaces of the first and second polymeric components.

13. The assembly of Claim 11, wherein top surface of the first polymeric component is lower than top surface of the second polymeric component, and the second polymeric component overlaps the top surface of the first polymeric component from a top view of the assembly.

14. The assembly of any one of Claims 11 to 13, wherein the visible boundary line is a straight line, a curve, a spline or a polyline from a top view of the assembly.

15. The assembly of Claim 11, further comprising:
a third polymeric component having a third skin layer; and
a fourth polymeric component having a fifth skin layer,
wherein the third skin layer is in contact with a fourth skin layer of the second polymeric component,
wherein the fifth skin layer is in contact with bottom surfaces of the first and second polymeric components and a bottom surface of the third polymeric component, and a first lateral surface of the first polymeric component and a second lateral surface of the third polymeric component are in contact with the fifth skin layer.
